# EUROPEAN PATENT APPLICATION

(11) **EP 4 745 480 A1**
(43) Date of publication of application: **20.05.2026**
(21) Application number: 25829358.8
(22) Date of filing: 20.03.2025
(51) Int. Cl.: F24H 7/00

(54) **THERMAL ENERGY STORAGE DEVICE AND THERMAL ENERGY STORAGE SYSTEM**

(30) Priority: 18.06.2024 CN 202410790567
(71) Applicant: Freshape SA, 1020 Renens (CH)
(72) Inventor: YAO, Yuanpeng, Shanghai 201112 (CN); SU, Hao, Shanghai 201112 (CN); WEN, Yu, Shanghai 201112 (CN); CHEN, Renzong, Shanghai 201112 (CN); ZHA, Rui, Shanghai 201112 (CN)
(74) Representative: Noble, Nicholas
(86) International application number: PCT/CN2025/083754
(87) International publication number: WO 2025/260871

(57) **Abstract**

A thermal energy storage device and a thermal energy storage system. The thermal energy storage device comprises: a housing that comprises an outer container, an inner container, and a thermal insulation unit, wherein the inner container is disposed in the outer container, and the thermal insulation unit is disposed in an intermediate interlayer between the inner container and the outer container; a thermal storage material that fills the inner container; a heat charging unit that comprises at least one heat charging module, wherein the heat charging module is configured to heat the thermal storage material; and a heat releasing unit that comprises at least one heat releasing module, wherein the heat releasing module is configured to use the heat stored in the thermal storage material to supply heat to the outside. The thermal energy storage device can have higher energy/power density, a higher heat charging/releasing rate, good thermal-insulation performance, and a relatively long service life, and can be miniaturized, facilitating household applications of the thermal energy storage device.

## Description

### CROSS REFERENCES TO RELATED APPLICATION

This application claims priority to Chinese Patent Application No. 2024107905677, filed on June 18, 2024, entitled "THERMAL ENERGY STORAGE DEVICE", the content of which is hereby incorporated by reference in its entirety.

### TECHNICAL FIELD

The present invention relates to the field of energy storage technology, specifically to a thermal energy storage device and a thermal energy storage system.

### BACKGROUND

Thermal energy storage device can convert electrical energy and other forms of energy into thermal energy, so as to achieve energy storage through thermal energy storage. Therefore, the structural design of thermal energy storage devices has become an important research topic urgently needed by those skilled in the art.

### SUMMARY

An object of the present invention is to provide a thermal energy storage device that has relatively good thermal insulation performance.

To solve the aforementioned technical problems, the present invention discloses a thermal energy storage device, which includes a housing, a thermal energy storage material, a heat charging unit and a heat discharging unit. The housing includes an outer container, an inner container, and a thermal insulation unit. The inner container is provided inside the outer container, and the thermal insulation unit is provided in an intermediate interlayer between the inner container and the outer container. The thermal energy storage material is filled in the inner container. The heat charging unit includes at least one heat charging module configured to heat the thermal energy storage material. The heat discharging unit includes at least one heat discharging module configured to supply heat externally by utilizing the heat stored in the thermal energy storage material to provide.

In the aforementioned solution, the thermal insulation unit is provided in the intermediate interlayer between the inner container and the outer container. The thermal insulation unit is configured to improve the thermal insulation performance of the housing, which can reduce the thermal conductivity and enable the thermal energy storage device to have relatively efficient thermal insulation performance.

Optionally, the intermediate interlayer is in a preset vacuum state, and/or the thermal insulation unit includes one or more nanometer thermal insulation material layer. The intermediate interlayer is in a preset vacuum state, one or more nanometer thermal insulation material layer is filled in the intermediate interlayer.

In the aforementioned solution, the intermediate interlayer between the inner container and the outer container is in the vacuum state, filled with nanometer thermal insulation material. This reduces the thermal conductivity, ensuring the thermal energy storage device with relatively high thermal insulation performance.

Furthermore, due to the relatively good thermal insulation performance, a thickness of the intermediate interlayer may be made thinner. With the outer container unchanged, a size of the inner container can be increased, allowing for an increase in a filling amount of the thermal energy storage material, which also improves the thermal energy storage performance of the thermal energy storage device. Conversely, with the inner container unchanged, a size of the outer container can be reduced, facilitating the miniaturization of the thermal energy storage device and simplifying construction.

In addition, the superior thermal insulation performance allows the thermal energy storage material in the thermal energy storage device provided by the present invention to maintain high thermal efficiency even after being kept at high temperatures for a long time (e.g., 24 hours) before discharging heat. This is significant for improving the power density and the energy storage density of the thermal energy storage device.

Optionally, the thermal energy storage device further includes a vacuum pump in communication with the intermediate interlayer, and the vacuum pump is configured to be operated to maintain a preset vacuum pressure.

Optionally, the preset vacuum pressure is in a range from 10 mbar to 200 mbar.

Optionally, the thermal energy storage device further includes sensors for measuring temperature or pressure at one or more positions in the thermal energy storage device, and the vacuum pump is configured to be turned on and turned off based on the temperature or the pressure.

Optionally, the nanometer thermal insulation material layer includes core material and an encapsulation portion. The core material is encapsulated in the encapsulation portion, and the core material includes fumed silica particles, a light-shielding agent, and reinforcing fibers.

Optionally, the nanometer thermal insulation material layer is configured as flat first thermal insulation plates located on an upper side and a lower side of the inner container. The thermal insulation unit is provided with first thermal insulation plates including a nanometer thermal insulation material, and the first thermal insulation plates are located on a top surface and a bottom surface of the inner container.

Optionally, the nanometer thermal insulation material layer is further configured as a second thermal insulation plate capable of being rolled up, and the second thermal insulation plate is located on an outer periphery of the inner container. The thermal insulation unit is provided with a second thermal insulation plate including a nanometer thermal insulation material, and the second thermal insulation plate is located on the outer periphery of the inner container.

Optionally, a plurality of nanometer thermal insulation material layers are provided, and a heat reflection layer is provided between each of the nanometer thermal insulation material layers. The thermal insulation unit is provided with a plurality of the nanometer thermal insulation material layers, and a heat reflection layer is provided between each of the nanometer thermal insulation material layers.

Optionally, a plurality layers of the nanometer thermal insulation material are provided, and a heat reflection layer is provided between adjacent two layers of the nanometer thermal insulation material.

Optionally, the housing is provided with a detection component and a signal connection portion, and the detection component and the signal connection portion are signal-connected; and/or, the thermal energy storage device further includes a backup power supply.

Optionally, the thermal insulation unit includes an inner layer thermal insulation portion and an outer layer thermal insulation portion, the inner layer thermal insulation portion is closer to the inner container than the outer layer thermal insulation portion, and the inner layer thermal insulation portion and the outer layer thermal insulation portion are made of different materials.

Optionally, the inner layer thermal insulation portion includes at least one nanometer thermal insulation material layer and at least one heat reflection layer.

Optionally, the outer layer thermal insulation portion includes at least one air gel felt layer and at least one heat reflection layer.

Optionally, the heat charging module includes an electric heat charging mechanism and a heat charging tube. The heat charging tube is at least partially located in the thermal energy storage material. The electric heat charging mechanism includes an electric heat charging rod inserted in the heat charging tube.

Optionally, the electric heat charging rod and an inner wall surface of the heat charging tube are in contact; or, the electric heat charging mechanism further includes a heat transferring sleeve sleeved on the electric heat charging rod. An outer wall surface of the electric heat charging rod is in contact with an inner wall surface of the heat transferring sleeve, and an outer wall surface of the heat transferring sleeve is in contact with the inner wall surface of the heat charging tube.

Optionally, the heat transferring sleeve is made of any one selected from a group consisting of metal, graphite, carbide ceramic, etc.

Optionally, the heat charging module includes an electric heat charging mechanism. The electric heat charging mechanism includes a planar electric heating component configured to be capable of bending and be arranged on an outer wall of the inner container and/or an outer bottom surface of the inner container.

Optionally, the heat charging module includes a photothermal charging mechanism and a heat charging tube. The heat charging tube is at least partially located in the thermal energy storage material. The photothermal charging mechanism includes a light transmission component configured to transmit light into the heat charging tube.

Optionally, an inner hole of the heat charging tube is a hole with a constant cross-section; or, an inner hole of the heat charging tube is a hole with gradually reduced cross-section in a direction away from the light transmission component; or, at least a partial section of an inner hole of the heat charging tube is provided with an internal thread or an engaging slot.

Optionally, the photothermal charging mechanism further includes a light guiding component connected to the light transmission component, and the light guiding component is configured to guide the light transmitted from the light transmission component to an inner wall surface of the heat charging tube.

Optionally, the thermal energy storage material includes an aluminum-silicon alloy material capable of undergoing a phase change during a process of heat charging and a process of heat discharging, and the inner container is provided with a reserved space on a upper side of the thermal energy storage material.

Optionally, an outer wall surface of the heat charging tube is provided with a flow suppression structure.

Optionally, a portion of at least one of the inner container, the heat charging module, and the heat discharging module in contact with the thermal energy storage material is configured as a double-layer structure. The double-layer structure includes a contact portion and a non-contact portion that are sleeved to each other. The contact portion is in direct contact with the thermal energy storage material. The contact portion is made of titanium alloy, and the non-contact portion is made of stainless steel.

Optionally, a portion of at least one of the inner container, the heat charging module, and the heat discharging module in contact with the thermal energy storage material is provided with a corrosion resistant layer.

Optionally, the corrosion resistant layer is one or more selected from a group consisting of an electroplated layer, a structural ceramic layer, a structural ceramic mixed with graphite layer, a carbon steel aluminized layer, and a titanium alloy, capable of achieving corrosion resistance at specific high temperatures.

Optionally, the thermal energy storage material includes at least one thermal energy storage module. The thermal energy storage module includes an inner layer portion and an outer layer portion. The inner layer portion is located inside the outer layer portion, and the thermal energy storage module has a cylindrical interface between the inner layer portion and the outer layer portion. The number of the heat discharging modules is the same as the number of the thermal energy storage modules, and the heat discharging modules are correspondingly provided in the thermal energy storage modules. Each of the heat discharging modules includes at least one first heat discharging tube arranged along an axial direction and a circumferential direction of the interface. A tube wall of the first heat discharging tube includes an inner side wall portion and an outer side wall tube in a circumferential direction thereof. The inner side wall portion is located in the inner layer portion, and the outer side wall tube is located in the outer layer portion.

Optionally, the first heat discharging tube includes a first tube section. A projection of the first tube section in the axial direction of the interface does not overlap with a projection of the interface in the axial direction of the interface. A number of first tube sections is greater than or equal to three, and each of the first tube sections is arranged spaced apart along a circumferential direction of the interface.

Optionally, the first heat discharging tube includes at least one second tube section, and a projection of the second tube section in the axial direction of the interface overlaps with the projection of the interface in the axial direction of the interface.

Optionally, the second tube section is an annular tube or a spiral coil. The heat discharging module includes at least one heat discharging tube provided in the inner container or in the intermediate interlayer.

Optionally, the heat discharging module includes at least one heat discharging tube provided in the thermal energy storage material, and the heat discharging tube includes an annular tube or a spiral coil; or
at least a partial section of the heat discharging tube is a bend tube, and central axes of the heat discharging tubes are located in the same plane.

The present invention provides a thermal energy storage system, which includes the thermal energy storage device according to any one of the aforementioned embodiments, a heat charging apparatus, and a heat discharging apparatus. The heat charging apparatus is configured to be connected to the heat charging unit to provide a heat source to the heat charging unit, and the heat discharging apparatus is configured to be connected to the heat discharging unit to provide a heat exchange medium externally.

Optionally, the heat exchange medium includes water and/or water vapor. The heat discharging apparatus includes a steam supply mechanism. The steam supply mechanism includes a first water channel and a first vapor channel. The first water channel is in communication with an input end of the heat discharging unit, and the first vapor channel is in communication with an output end of the heat discharging unit. The first water channel supplies water to the heat discharging unit, and the first vapor channel supplies hot water and/or water vapor externally.

Optionally, the heat discharging apparatus further includes a second water channel. The first vapor channel is connected to a steam-water mixing component, and the second water channel is connected to the steam-water mixing component.

### BRIEF DESCRIPTION OF THE DRAWINGS

FIG. 1 is a schematic diagram of a thermal energy storage device according to the present invention, with an inner cavity filled with thermal energy storage material;
FIG. 2 is a schematic diagram of the thermal energy storage device according to the present invention, with the thermal energy storage material omitted from the inner cavity;
FIG. 3 is a schematic diagram of the thermal energy storage device according to the present invention, equipped with an electric heat charging mechanism;
FIG. 4 is a partial structural diagram of a heat charging tube;
FIG. 5 is a schematic diagram of an implementation of a thermal insulation unit;
FIG. 6 is a distribution diagram of an implementation of the heat discharging unit in the thermal energy storage material;
FIG. 7 is a boiling heat transfer curve;
FIG. 8 is a distribution diagram of another implementation of the heat discharging unit in the thermal energy storage material;
FIG. 9 is a schematic diagram of an implementation of the first heat discharging tube;
FIG. 10 is a schematic diagram of another implementation of the first heat discharging tube.
FIG. 11 is a distribution diagram of another implementation of the heat discharging unit in the thermal energy storage material;
FIG. 12 is a schematic diagram of a heat discharging tube in an inner container;
FIG. 13 is a schematic diagram of a third heat discharging tube in the thermal energy storage material;
FIG. 14 is a schematic diagram a thermal energy storage system according to the present invention;
FIG. 15 is a circuit diagram of an implementation of a voltage adjustment component;
FIG. 16 is a circuit diagram of an implementation of an adjustable resistor;
FIG. 17 is a schematic diagram of a steam supply mechanism;
FIG. 18 is a schematic diagram of a hot water supply mechanism;
FIG. 19 is a schematic diagram of another hot water supply mechanism;
FIG. 20 is a schematic diagram of yet another hot water supply mechanism.
FIG. 21 is a schematic diagram of still another hot water supply mechanism;
FIG. 22 is a schematic diagram of a steam-water mixing component;
FIG. 23 is a schematic diagram of another steam-water mixing component.

### Description of the Reference Numerals:

100 : thermal energy storage device; 110: housing; 111: inner container; 111a: inner cavity; 111a-1: reserved space; 112: outer container; 112a: thermal insulation cavity; 113: thermal insulation unit; 113a: first thermal insulation plate; 113b: nanometer thermal insulation material; 113c: heat reflection layer; 113d: inner layer thermal insulation portion; 113e: outer layer thermal insulation portion; 113e-1: air gel felt; 114: heat charging connection portion; 115: heat discharging inlet connection portion; 116: heat discharging outlet connection portion; 117: signal connection portion; 120: heat charging tube; 121:first tube portion; 122: second tube portion; 122a: flow suppression structure; 130: thermal energy storage material; 131: thermal energy storage module; 131a: inner layer portion; 131b: outer layer portion; 131c: interface; 140: heat discharging unit; 141: heat discharging module; 141a: first heat discharging tube; 141a-1: inner side wall portion; 141a-2: outer side wall tube; 141aa: first tube section; 141ab: second tube section; 141b: second heat discharging tube; 141c: third heat exchange tube; 142: heat discharging inlet tube; 143: heat discharging outlet tube; 144: communication tube; 150: electric heat charging mechanism; 151 electric heat charging rod; 151a: optional resistor; 151b: relay switch; 152: heat transferring sleeve; 153: connection cable; 154: joint butt;
200: heat charging apparatus; 210: unstable energy generation mechanism; 220: voltage adjustment component; 221: field effect transistor; 222: diode; 223: inductor; 224: capacitor;
300: heat discharging apparatus; 310: steam supply mechanism; 311: first water channel; 311 a: first pump body; 311b: second proportional valve; 311c: fourth proportional valve; 312: first vapor channel; 312a: bypass branch; 312a-1: sixth proportional valve; 312b: seventh proportional valve; 320: second water channel; 321: second pump body; 322: third proportional valve; 323: fifth proportional valve: 330: steam-water mixing component; 330a: mixer; 330b: steam inlet portion; 330c water inlet portion; 330d: outlet portion; 330e: spoiler structure; 330f: diffuser; 330g: heat exchanger; 330h: first outlet tube; 330i: second outlet tube; 330j: main outlet tube; 340: communication channel; 341: first proportional valve.

### DETAILED DESCRIPTION OF THE EMBODIMENTS

To enable those skilled in the art to better understand the technical solutions of the present invention, the present invention will be further described in detail below with reference to the accompanying drawings and specific embodiments.

In the embodiments of the present invention, the terms "first," "second," "third," "fourth," "fifth," "sixth," and "seventh" are used for descriptive purposes only and should not be construed as indicating or implying relative importance or implicitly specifying the number of indicated technical features. Therefore, a feature defined with "first," "second," "third," "fourth," "fifth," "sixth," and "seventh" may explicitly or implicitly include one or more of that feature.

In the description of the embodiments of the present invention, it should be noted that, unless otherwise explicitly specified and limited, the terms "mounted," "connected," and "linked" should be interpreted broadly. For example, "connected" may be a detachable connection or a non-detachable connection; it can be a direct connection or an indirect connection through an intermediate medium.

The directional terms used in the embodiments of the present invention, such as "inner" and "outer," are merely for reference to the directions in the accompanying drawings. Therefore, the use of directional terms is for better and clearer explanation and understanding of the embodiments of the present invention, and does not indicate or imply that the referred device or element must have a specific orientation, or be constructed and operated in a specific orientation. Therefore, they should not be construed as limitations on the embodiments of the present invention. Furthermore, unless otherwise stated in the present invention, "a plurality of" refers to two or more; and when "a plurality of" is used to describe the quantity of different components, it does not indicate a quantitative relationship between these components.

In the description of the embodiments of the present invention, the terms "comprise," "include," or any other variations thereof are intended to cover non-exclusive inclusion, such that a process, a method, an article, or an apparatus including a list of elements includes not only those elements but also other elements not expressly listed, or elements inherent to such a process, a method, an article, or an apparatus. Without further limitations, an element defined by the phrase "includes a ..." does not exclude the presence of other identical elements in the process, method, article, or apparatus that includes that element.

In the embodiment of the present invention, "and/or" is merely a description of the relationship between related objects, indicating that three relationships can exist. For example, A and/or B can represent: A existing alone, A and B existing simultaneously, or B existing alone. Furthermore, the character "/" in this document generally indicates that the preceding and following related objects have an "or" relationship.

In an existing solid thermal energy storage device, a magnesium oxide brick is used as a thermal energy storage body, and a ceramic fiber blanket is used as a thermal insulation layer. A thermal insulation thickness is in a range from 300mm to 400mm. The A-thermal conductivity of the ceramic fiber blanket is 0.153W/(m·K) when the thermal surface temperature is 500°C. After a temperature of the thermal energy storage body of 1MWh is increased to 650°C, heat discharging is performed at once for 8 to 10 hours. Statistical thermal efficiency may be greater than 95% after a period of the heat discharging ends. If heat discharging is performed at an interval of 6 hours after the heat charging, thermal efficiency is greatly reduced. In addition, this kind of apparatus is mostly applied to a distributed centralized heat supply scenario, and has a large volume, a small body type coefficient, and a small heat dissipation area ratio. Therefore, the device may use an existing thermal insulation material with a high thermal conductivity to achieve proper thermal efficiency. For a miniaturized thermal energy storage device with large temperature difference, for example, a volume is less than 2m³, to achieve high thermal efficiency and high thermal energy storage density, not only a high volumetric thermal energy storage density of the thermal energy storage material body is required, but also a thermal conductivity of the thermal insulation layer at a temperature of 600°C is required to be low enough. In this case, a thickness of the thermal insulation layer needs to be controlled below 100 mm, and a thermal conductivity of the thermal insulation material in the thickness direction needs to be cntrolled less than 20mW/(m·K). Parameter of the existing thermal insulation materials are shown in Table 1 below, all of which cannot meet the requirement.

**Table 1 Parameters of existing thermal insulation materials**

| Material name | Thermal conductivity (W/m·k) | Temperature resistance |
|---|---|---|
| Nanometer thermal insulation material | 0.028(500°C) | 850°C-1150°C |
| Air gel felt | 0.065(500°C) | 650°C |
| Ceramic fiber board | 0.153(500°C) | 850°C-1750°C |
| Ceramic fiber blankets | 0.153(500°C) | 900°C-1580°C |
| Calcium silicate board | 0.115(500°C) | 1000°C |
| Mullite | 0.2(350°C) | 1350°C |
| Rock cotton | 0.1(500°C) | 500°C |
| Glass wool | 0.04 (at room temperature) | 300°C |
| Vermiculite board | 0.14(400°C) | 1150°C |
| Rubber and plastic | 0.034(0°C) | 110°C |
| Polyurethane (PU) | 0.024 (at room temperature) | 80°C |
| VIP | 0.0045 (at room temperature) | 80°C |
| STP | 0.008 (at room temperature) | 100°C |

In an existing composite thermal insulation solution for a large temperature difference thermal energy storage device, when a room temperature is 28°C and a heat surface temperature is 600°C, when a thickness of the thermal insulation layer is 60 mm, the heat dissipation strength is 151W/m².

In the patent "Improved Thermal Store" (Application No. WO2022GB00084), in accordance with a first aspect, there is provided a heat store for an energy storage system, comprising: an inner vessel housing a thermal energy store; and an outer vessel surrounding the inner vessel, the inner and outer vessels being spaced by a vacuum region extending therebetween. The heat store further comprises thermal insulation provided within the vacuum region. In this way, the level of vacuum required to achieve the desired degree of insulation may be reduced. An adiabatic body in the vacuum region has a MLI structure, and each layer of the multi-layer adiabatic body includes a reflection layer and a spacer layer. A spacing between the reflective layer and the spacer layer of each layer of the multi-layer insulating layers is between 1 mm to 0.01mm. The level of vacuum is controlled via the vacuum pump based on pressure or temperature parameters monitored and fed back by sensors. The heating mode is resistance heating. The heat transfer fluid is water. Volcanic composite aluminum is used as thermal energy storage material to store energy in the form of solid sensible heat. In the thermal energy storage device, the outer container is connected through the neck portion. The neck portion needs to avoid stress concentration, minimize heat leakage, and ensure strength. The thermal energy storage device is further provided with a dispersion plate configured to restrict movement of the inner container relative to the outer container during transportation.

The heat store further comprises an internal brace provided inside the vacuum region, the internal brace being configured to engage an inner surface of the outer vessel and resist compression of the outer vessel. As such, the vacuum insulated vessels with relatively thin outer container walls may have the ability to withstand compression forces generated by negative pressures in the vessels and/or withstand external pressures/external shocks.

In accordance with a second aspect, there is provided an energy storage system comprising a heat store according to the first aspect.

In accordance with a third aspect of the present invention, there is provided an energy storage system, comprising: a thermal energy store (e.g. thermal mass); a primary circuit (e.g. steam circuit) comprising a first heat transfer fluid; an evaporator heat exchanger stage configured to receive thermal energy from the thermal energy store and to evaporate the first heat transfer fluid in liquid form to form a gas stream; a condenser heat exchanger stage configured to condense the gas stream received from the evaporator heat exchanger stage; and a secondary circuit (e.g. non-steam circuit) comprising a second heat transfer fluid, the secondary circuit being configured to receive thermal energy from the primary circuit via the condenser heat exchanger stage and to supply the received thermal energy to a heating system (e.g. hot water/central heating system).

A thermal insulation solution for a vacuum intercalation composite air gel felt is proposed in the paper "An Experimental Study of Thermal Insulation Structure of Al-Si Alloy Phase Change Heat Storage Device". A sidewall and a bottom surface thereof is provided with a vacuum interlayer with a thickness of 10 mm, a top surface air gel felt has a thickness of 130mm, a side surface air gel felt has a thickness of 50 mm, and a bottom surface air gel felt has a thickness of 70 mm. When a thermal surface temperature is 600°C, the intensity of heat emission of the thermal insulation outer container is 151W.

### Disadvantages of the prior art:

1. In the MLI vacuum insulation solution, the apertures are large and the requirements for the vacuum level are high.
2. In the MLI vacuum insulation solution, a large number of layers (up to 200 layers is provided when the temperature difference is 500 ° C). The construction is cumbersome and cannot reach the theoretical gap of 0.01mm, and the theoretical thermal conductivity cannot be obtained. The thermal insulation layer is too thick and the bulk storage energy density of the whole device is low.
3. The internal outer container is suspended or supported by a neck tube, and has a heat bridge, which causes great heat loss.
4. To meet both the strength and weight reduction requirements, the outer container requires brackets with complex structures and high costs.
5. The inner outer container interlayer should have a region without thermal insulation material. The thickness of the thermal insulation layer should be increased, and the bulk energy storage density should be low.
6. In an existing LCI thermal insulation solution, the thermal conductivity is high, causing low thermal efficiency and low bulk storage energy density.

The present invention proposes a vacuum insulation solution of a plurality of material combinations. When a room temperature is 25°C and a temperature of a hot surface is 600°C, an equivalent thermal conductivity in a thickness direction may be reduced to 13mW/(m·K), and when a thickness of a thermal insulation layer is 60 mm, a heat dissipation strength is 117W/m². When the large temperature difference thermal energy storage apparatus in this solution is a cylinder with a diameter and a height equal to 850mm, the thermal insulation thickness is 100 mm, the thermal energy storage capacity is 120kwh, and the body type coefficient is 7. Even the thermal energy storage material discharge heat after being maintained at 576°C for 24 hours, the thermal efficiency can still reach more than 95%.

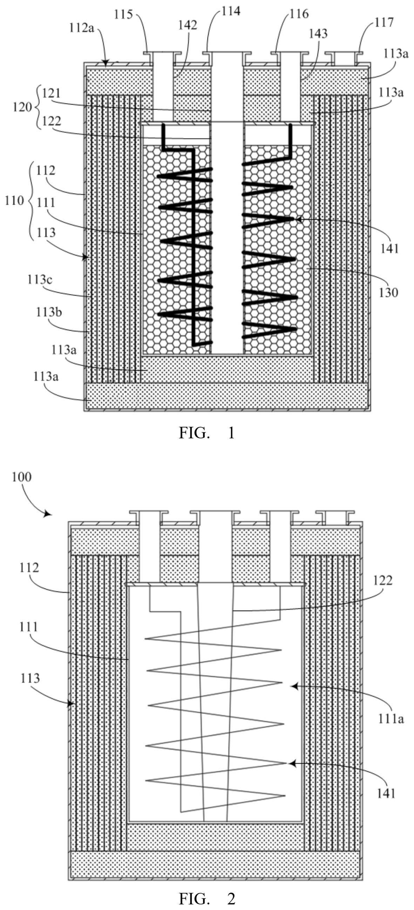

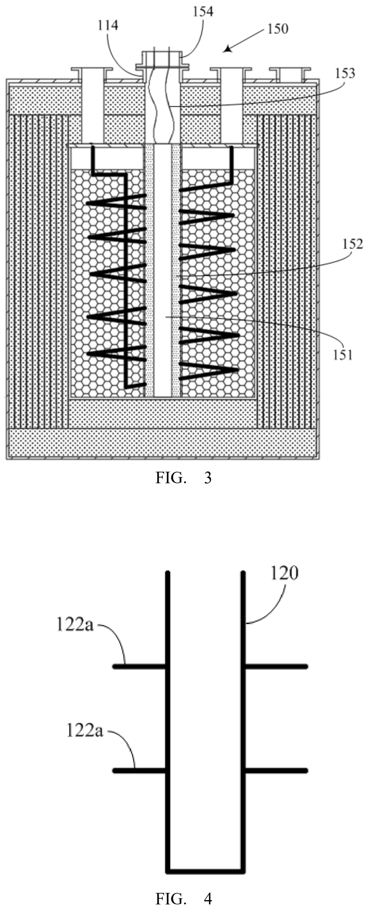

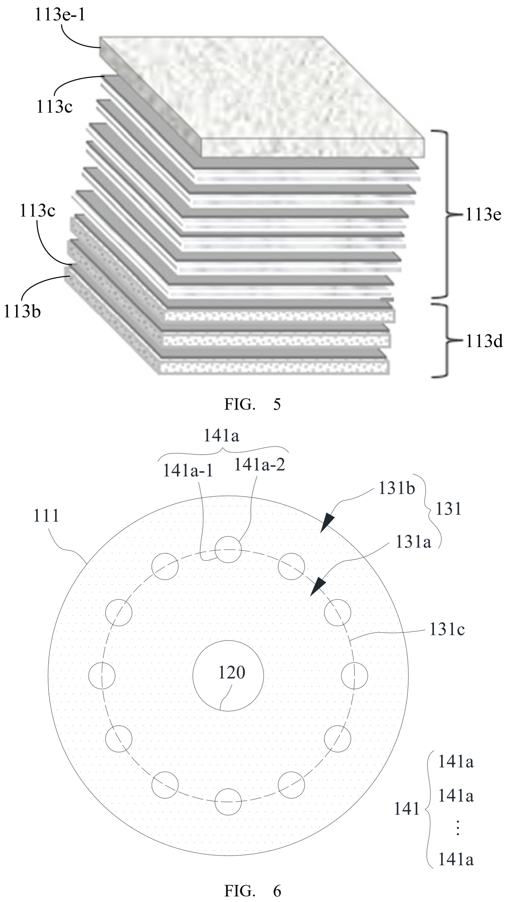

Referring to FIG. 1 to FIG. 5, FIG. 1 is a schematic diagram of a thermal energy storage device according to the present invention, with an inner cavity filled with thermal energy storage material; FIG. 2 is a schematic diagram of the thermal energy storage device according to the present invention, with the thermal energy storage material omitted from the inner cavity; FIG. 3 is a schematic diagram of the thermal energy storage device according to the present invention, equipped with an electric heat charging mechanism; FIG. 4 is a partial structural diagram of a heat charging tube; FIG. 5 is a schematic diagram of an implementation of a thermal insulation unit.

As shown in FIG. 1 and FIG. 2, an embodiment of the present invention provides a thermal energy storage device 100, including a housing 110, a heat charging unit, a thermal energy storage material 130, and a heat discharging unit 140. The heat charging unit includes a heat charging module, and the heat charging module includes a heat charging tube 120.

As an external structure of the thermal energy storage device 100, the housing 110 basically determines an overall shape of the thermal energy storage device 100. In some embodiments, the shape of the housing 110 may be presented generally as a cylindrical structure. In some other embodiments, the shape of the housing 110 may also be presented as a triangular prism, a quadrangular prism, another shape, or the like, which is not limited herein.

The housing 110 also has an inner cavity 111a, which is configured to fill the thermal energy storage material 130. The thermal energy storage material 130 can absorb heat to implement thermal energy storage. The housing 110 is specifically a thermal insulation housing, which can insulate the thermal energy storage material 130, so as to greatly reduce heat loss, thereby reducing a heat loss of the thermal energy storage device 100.

Herein, a specific structural form of the housing 110 is not limited in the embodiment of the present invention. In actual application, a person skilled in the art may select the housing 110 according to a specific requirement, provided that a requirement for use can be met. For example, a person skilled in the art may directly manufacture the housing 110 by using a board body with better thermal insulation performance.

In some optional embodiments, as shown in FIG. 1 and FIG. 2, the housing 110 may include an inner container 111, an outer container 112, and a thermal insulation unit 113.

The inner container 111 may be provided on an inner side of the outer container 112. In addition, an internal cavity of the inner container 111 may be used as the aforementioned inner cavity 111a to fill the thermal energy storage material 130.

The inner container 111 may be of a double-layer structure, including an inner layer housing portion and an outer layer housing portion connected to each other. In the embodiment of the present invention, the inner layer housing portion is a contact portion, and is configured to be in direct contact with the thermal energy storage material 130. The outer layer housing portion is a non-contact portion, which is not in direct contact with the thermal energy storage material 130. The inner layer housing portion may specifically be made of a titanium alloy material, and the outer layer housing portion may specifically be made of a stainless steel material. The titanium alloy material may have a relatively high corrosion resistant performance. Therefore, the inner layer housing portion made of the titanium alloy material is not easily corroded when the thermal energy storage material 130 is accommodated, and may have a longer service life. The stainless steel material may have a relatively high strength performance. Therefore, the outer layer housing portion made of the stainless steel material can greatly improve the mechanical strength of the inner container 111. In addition, the cost of the stainless steel material is relatively low, which helps reduce the cost.

The aforementioned inner layer housing portion and the outer layer housing portion may be connected by using a heterogeneous metal vacuum brazing process, and the solder may be a silver-based solder, a titanium-based solder, or the like. Alternatively, the aforementioned inner layer housing portion and outer layer housing portion made be connected by using a vacuum ion welding process. In short, a reliable connection needs to be made between the inner layer housing portion and the outer layer housing portion.

It should be understood that the aforementioned solution that the inner container 111 are provided as a double-layer structure is merely an exemplary of the embodiment of the present invention, and cannot be used as a limitation on the implementation scope of the thermal energy storage device 100 provided in the present invention. Under a condition that a function is met, the inner container 111 may also use another structural form. For example, in the aforementioned double-layer structure, the inner layer housing portion and the outer layer housing portion may be made of different materials respectively. Alternatively, the inner container 111 may use a single-housing structure. Alternatively, the inner container 111 may be manufactured by using three layers or more of housings.

In some optional embodiments, a corrosion resistance layer (not shown) may further be provided on an inner wall surface of the inner container 111, so as to improve corrosion resistant performance of the inner container 111.

The aforementioned corrosion resistant layer may be an electroplating layer formed by, for example, a reinforcing surface material such as chromium or nickel. Alternatively, the aforementioned corrosion resistant layer may be a structure ceramic layer or a structure ceramic mixed graphite layer. The structure ceramic may be, for example, boron nitride or silicon nitride, and may be formed by using a spraying process or the like. These structural ceramics can react with themselves at a certain temperature to generate a dense protective layer to improve corrosion resistant performance of the inner container 111. In addition, the structural ceramics can react with the metal material in a relatively short time to form a metal complexing layer, so as to have better adhesion, therefore avoiding falling off to a large extent, which has a positive significance for ensuring corrosion resistant performance of the corrosion resistant layer. Alternatively, the aforementioned corrosion resistant layer may be a carbon steel aluminizing layer. As such, relatively good corrosion resistance, oxidation resistance, high temperature stability, and mechanical performance can also be provided. Alternatively, the corrosion resistant layer may be made of titanium alloy.

In fact, the aforementioned corrosion resistant layer may have a plurality of layers, for example, may have two layers, and the two layers may be the aforementioned electroplated layer and the structural ceramic layer, respectively. The electroplated layer may be used as an inner layer to be directly connected to an inner wall surface of the inner container 111, and the structural ceramic layer may be coated on the electroplated layer. As such, corrosion resistant performance of the inner container 111 may be improved to a greater extent.

In a specific application, a double-layer structure of the corrosion resistant layer and the inner container 111 may be alternatively provided.

The outer container 112 may be located on an outer side of the inner container 111, and a material of the outer container 112 is not limited herein, for example, may be a stainless steel material. A thermal insulation cavity 112a may be formed between the outer container 112 and the inner container 111. The thermal insulation cavity 112a may be used as an intermediate interlayer, and the aforementioned thermal insulation unit 113 may be provided in the thermal insulation cavity 112a, so as to improve thermal insulation performance of the housing 110.

In an embodiment of the present invention, the intermediate interlayer is in a vacuum state. The thermal insulation unit 113 may specifically include a nanometer thermal insulation material 113b. The thermal insulation cavity 112a may be presented as a vacuum state. The nanometer thermal insulation material 113b may use materials with low solid conductivity and filled with very small pore/void spaces, these pore/void spaces have a much smaller size than the average free path of atoms/molecules, thus they can artificially limit the movable distance of atoms/molecules to obtain relatively good thermal insulation performance. In the embodiment of the present invention, the nanometer thermal insulation material 113b may also be referred to as a nanometer thermal insulation material layer.

The aforementioned nanometer thermal insulation material 113b may include a core material and an encapsulation portion, and the core material may be encapsulated in the encapsulation portion. The core material and the encapsulation portion may have various types, which can be determined according to a specific requirement and the like. For example, the core material may include a gaseous silicon dioxide particle, a light shielding agent, a reinforcing fiber, and the like. Components in the core material may be mixed according to a specified proportion, and then be compacted. The encapsulation portion may be a glass fiber cloth or the like.

In the embodiment of the present invention, a pore space of a gas-phase silicon dioxide is very small, and an average pore diameter of the pore space of the gas-phase silicon dioxide is between 0.001mm to 0.05mm, thus a relatively high thermal insulation performance can be ensured under only a relatively low vacuum level. For example, in the embodiment of the present invention, a vacuum pressure (a preset vacuum pressure) of an intermediate interlayer may be in a range from 10mbar to 200mbar. In a conventional solution, for example, in a common multi-layer insulation material (MLI for short), a vacuum pressure of the MLI is 10,000 times lower than a vacuum pressure of the aforementioned gaseous phase silicon dioxide. For example, a pore space size of a common perlite is generally in a range from 0.02mm to 0.1mm, which is about 20 times larger than a pore space size of the gaseous phase silicon dioxide. Therefore, a better vacuum level is required, and a requirement is generally lower than 0.05mbar.

It may be inferred from comparison that a requirement for a vacuum level of the nanometer thermal insulation material 113b used in the embodiment of the present invention may be greatly reduced, such that a use condition of the thermal energy storage device 100 provided in the embodiment of the present invention can be reduced, and the cost may be relatively low. Correspondingly, under the same vacuum level condition, the nanometer thermal insulation material 113b in the embodiment of the present invention may reach a lower thermal conductivity. In a specific example, in the embodiment of the present invention, a thermal conductivity of the nanometer thermal insulation material 113b at 600°C may reach 0.013W/(m·K), which can provide better thermal insulation performance. Correspondingly, under the same thermal insulation performance condition, an overall thickness of the housing 110 may be thinned. When an external size of the housing 110 remains unchanged, a size of the inner cavity 111a of the housing 110 may be increased, such that more space can be used to disposed the thermal energy storage material 130, thereby improving energy storage density of the thermal energy storage device 100 provided in the embodiment of the present invention.

In the embodiment of the present invention, the nanometer thermal insulation material 113b is usually prepared in a form of a heat insulation plate for use. For example, the nanometer thermal insulation material 113b may be configured as flat plate-like first thermal insulation plates 113a.

As shown in FIG. 1 and FIG. 2, the first thermal insulation plates 113a may be located on an upper side and a lower side of the inner container 111, that is, a top surface and a bottom surface of the inner container 111, such that the thermal insulation performance of the upper side and the lower side of the housing 110 can be improved. In addition, the first thermal insulation plates 113a may also be configured to support the inner container 111, so as to implement mounting and positioning of the inner container 111 in the outer container 112. In this embodiment, there is no need to provide a structural connection member such as a hanging connection member between the inner container 111 and the outer container 112, and heat bridges are not easy to form between the inner container 111 and the outer container 112, which can effectively reduce thermal leakage. This is advantageous for improving thermal insulation performance of the housing 110.

A pressure resistance strength of the aforementioned first thermal insulation plates 113a may be greater than 0.3MPa, thus it has a relatively high support performance, such that a component (for example, the inner container 111) in the outer container 112 can be better supported.

Herein, a quantity, a size, and the like of first thermal insulation plates 113a are not limited in the embodiment of the present invention. In actual application, a person skilled in the art may determine the quantity according to a specific requirement, provided that a requirement for use can be met. In fact, a number of the first thermal insulation plates 113a used is associated with parameters such as a size of the thermal insulation cavity 112a and a thickness of the first thermal insulation plates 113a. In embodiment of FIG. 1 and FIG. 2, two layers of the first thermal insulation plates 113a are provided on both an upper side and a lower side of the inner container 111.

The nanometer thermal insulation material 113b may be further configured as a second thermal insulation plate that can be curled, and the second thermal insulation plate may be curled into a cylindrical shape, and is further provided on an outer peripheral side of the inner container 111, so as to implement thermal insulation performance on an outer peripheral side of the housing 110.

It should be understood that radiation energy emitted in a unit time of a blackbody is directly proportional to a quadruple of an absolute temperature. Therefore, when there is a relatively large temperature difference between two surfaces, radiation heat transfer is relatively significant. To suppress the aforementioned radiation heat transfer, in the embodiment of the present invention, a light shielding agent is added to the core material of the nanometer thermal insulation material 113b, such that emissivity can be reduced, and the aforementioned radiation heat transfer phenomenon can be reduced, so as to improve thermal insulation performance.

In the embodiment of the present invention, the aforementioned nanometer thermal insulation material 113b provided on both the upper side and the lower side of the inner container 111 and the outer peripheral side of the inner container 111 may be configured as a plurality of layers. Each layer of nanometer thermal insulation material 113b may be arranged along a direction perpendicular to an axial direction of the heat charging tube 120, and a heat reflection layer 113c may be provided between adjacent layers of nanometer thermal insulation material 113b. The heat reflection layer 113c may specifically be aluminum foil, etc. The arrangement of the heat reflection layer 113c may reduce the absorption of radiative heat and increase reflection, thereby reducing radiative heat transfer. Research and testing show that when the number of heat reflection layers 113c reaches nine, radiative heat transfer will be decreased by approximately 90%.

Based on the superior thermal insulation performance in the embodiment of the present invention, when in use, the thermal energy storage device provided by the embodiment of the present invention can maintain high thermal efficiency even after the thermal energy storage material 130 has been maintained at a high temperature for a long time before discharging heat. This is of positive significance for improving the power density and energy storage density of the thermal energy storage device.

The thermal insulation cavity 112a may also be provided with vacuum level detection components, such as a thermal conductivity vacuum gauge, a Pirani vacuum gauge, a capacitor thin-film vacuum gauge, an ionization vacuum gauge, or a pressure gauge, so as to detect the vacuum level in the thermal insulation cavity 112a. For example, a pressure gauge may detect the pressure in the thermal insulation cavity 112a, thus the pressure can be used as a parameter reflecting the vacuum level.

Referring to FIG. 1 and FIG. 2, the outer container 112 may be provided with a signal connection portion 117. This signal connection portion 117 may be connected to the aforementioned vacuum level detection component and to an external vacuum pump. The vacuum level detection component allows for convenient start/stop control of the vacuum pump via detection of the vacuum level. The outer container 112 may also be provided with a vacuum extraction hole. The vacuum pump may be connected to this vacuum extraction hole to perform vacuuming through this vacuum extraction hole. The vacuum extraction hole may also be integrated into the aforementioned signal connection portion 117, thus achieving a higher level of device integration. The vacuum extraction hole and the aforementioned signal connection portion 117 may be independent of each other.

Specifically, the signal connection portion 117 may be specially a sintered glass vacuum connector, an aviation plug, and the like, for connection and disconnection with vacuum detection components, external vacuum pumps, and the like. The signal connection portion 117 may specially be connected to the outer container 112 via welding or other methods to avoid affecting the vacuum level in the thermal insulation cavity 112a.

In addition to the aforementioned pressure detection described, sensors may also be configured to measure the temperature at one or more locations in the thermal energy storage device. This temperature is also of reference significance for the start/stop control of the vacuum pump.

In other embodiments of the present invention, as shown in FIG. 5, the thermal insulation unit 113 may further include an inner layer thermal insulation portion 113d and an outer layer thermal insulation portion 113e.

The inner layer thermal insulation portion 113d may be closer to inner container 111 than the outer layer thermal insulation portion 113e. The materials of the inner layer thermal insulation portion 113d and the outer layer thermal insulation portion 113e may be different. As such, it is convenient to adjust the materials of inner layer thermal insulation portion 113d and outer layer thermal insulation portion 113e as needed, thereby better fulfilling the thermal insulation function of the thermal insulation unit 113 in the embodiment of the present invention.

In the thermal insulation cavity 112a, the temperature of the space where the inner layer thermal insulation portion 113d is located is higher than the temperature of the space where the outer layer thermal insulation portion 113e is located. Accordingly, in practical applications of the embodiment of the present invention, a material that still possesses relatively good thermal insulation performance in a relatively high-temperature space may be selected for the inner layer thermal insulation portion 113d, while a material that possesses relatively good thermal insulation performance in a relatively low-temperature space may be selected for the outer layer thermal insulation portion 113e.

The applicant's research has found that different insulation materials have different thermal conductivity, which increases with increasing temperature, but at different rates. This is mainly because different insulation materials achieve their insulation performance through different compositions and structural characteristics. However, for specific compositions and structural characteristics, insulation materials with extremely low thermal conductivity often only have an absolute advantage in specific temperature ranges. For example, the air gel felt has a thermal conductivity as low as 0.016 W/(m·K) at 25°C, rising to 0.035 W/(m·K) at a high temperature of 300°C, and further increasing to 0.06 W/(m·K) at 600°C. However, the nanometer thermal insulation material, due to its denser filling structure and the addition of a higher proportion of light-shielding agent, maintains a thermal conductivity below 0.03 W/(m·K) even at 600°C. Therefore, the nanometer thermal insulation material exhibits superior insulation performance in high-temperature regions.

Accordingly, in the embodiment of the present invention, the inner layer thermal insulation portion 113d may include at least one layer of nanometer thermal insulation material 113b, so as to ensure the thermal insulation performance of the inner layer thermal insulation portion 113d. When the number of nanometer thermal insulation material layers 113b is greater than one, a heat reflection layer 113c may be provided between two adjacent nanometer thermal insulation material layers 113b. The heat reflection layer 113c may be, for example, aluminum foil. The heat reflection layer 113c can reduce radiative heat transferring in the inner layer thermal insulation portion 113d, thereby significantly improving the thermal insulation performance of the inner layer thermal insulation portion 113d.

The outer layer thermal insulation portion 113e may include at least one air gel felt layer 113e-1, and the thermal insulation performance of the air gel felt layer 113e-1 in a relatively low-temperature space can be fully utilized, meanwhile the cost can also be effectively controlled. When the number of the air gel felt layers 113e-1 is greater than one, a heat reflection layer 113c may also be provided between two adjacent air gel felt layers 113e-1. The heat reflection layer 113c may be an aluminum foil, etc. The heat reflection layer 113c can reduce radiative heat transferring in the inner layer thermal insulation portion 113d, thereby significantly improving the thermal insulation performance of the inner layer thermal insulation portion 113d.

The temperature at a boundary between the inner layer thermal insulation portion 113d and the outer layer thermal insulation portion 113e may be in a range from 200°C to 350°C. A thickness of the nanometer thermal insulation material layer 113b in the inner layer thermal insulation portion 113d may be in a range from 5mm to 20mm. A thickness of the air gel felt layer 113e-1 in the outer layer thermal insulation portion 113e may be in a range from 3mm to 10mm. A thickness of the aluminum foil may be in a range from 0.02mm to 0.1mm.

To better verify the improvement of the inner layer thermal insulation portion 113d and outer layer thermal insulation portion 113e on the thermal insulation performance in the embodiments of the present invention, the embodiments of the present invention also conducted the following sets of experiments.

In Experiment 1, a total thickness of the thermal insulation unit 113 is 43 mm. The specific structure is as follows: the inner layer thermal insulation portion 113d includes three layers of the combination structure of the nanometer thermal insulation material layer 113b (with a thickness of 5 mm) and the aluminum foil (with a thickness of 0.02 mm). The outer layer thermal insulation portion 113e includes six layers of the combination structure of the air gel felt layer (with a thickness of 3 mm) and the aluminum foil (with a thickness of 0.02 mm), and one layer of the combination structure of the air gel felt layer (with a thickness of 10 mm) and the aluminum foil (with a thickness of 0.02 mm). A surface of the inner layer thermal insulation portion 113d in contact with the inner container 111 is a hot surface, and a surface of the outer layer thermal insulation portion 113e in contact with the outer container 112 is the cold surface. A temperature of the hot surface is 562 °C, and a temperature difference between the hot surface and the cold surface is 17.5 °C. The temperature at a boundary between the inner layer thermal insulation portion 113d and the outer layer thermal insulation portion 113e is 350°C. In this case, an average thermal conductivity of the thermal insulation unit 113 is 0.016 W/(m·K).

In Experiment 2, a total thickness of the thermal insulation unit 113 is 49 mm. The specific structure is as follows: the inner layer thermal insulation portion 113d includes six layers of the combined structure of the nanometer thermal insulation material layer 113b (with a thickness of 5 mm) + the aluminum foil (with a thickness of 0.02 mm); the outer layer thermal insulation portion 113e includes three layers of the combined structure of the air gel felt layer (with a thickness of 3 mm) + the aluminum foil (with a thickness of 0.02 mm), and one layer of the combined structure of the air gel felt layer 113e (with a thickness of 10 mm) + the aluminum foil (with a thickness of 0.02 mm). The temperature of the hot surface is 562 °C, and the temperature difference between the hot surface and the cold surface is 18.7 °C. The temperature at a boundary between the inner layer thermal insulation portion 113d and the outer layer thermal insulation portion 113e is 200°C. In this case, an average thermal conductivity of the thermal insulation unit 113 is 0.020 W/(m·K).

In Experiment 3, a total thickness of the thermal insulation unit 113 is 53mm. The specific structure is as follows: the inner layer thermal insulation portion 113d includes one layer of the combined structure of the nanometer thermal insulation material layer 113b (with a thickness of 20mm) + the aluminum foil (with a thickness of 0.02mm), and one layer of the combined structure of the nanometer thermal insulation material layer 113b (with a thickness of 15mm) + the aluminum foil (with a thickness of 0.02mm) . The outer layer thermal insulation portion 113e includes one layer of the combined structure of the air gel felt layer 113e (with a thickness of 3mm) + the aluminum foil (with a thickness of 0.02mm), and one layer of the combined structure of the air gel felt layer 113e (with a thickness of 3mm) + the aluminum foil (with a thickness of 0.02mm), and one layer of the combined structure of the air gel felt layer 113e (with a thickness of 10mm) + the aluminum foil (with a thickness of 0.02mm). The temperature of the hot surface is 562 °C, and the temperature difference between the hot surface and the cold surface is 15.3 °C. The temperature at a boundary between the inner layer thermal insulation portion 113d and the outer layer thermal insulation portion 113e is 232°C. In this case, an average thermal conductivity of the thermal insulation unit 113 is 0.017 W/(m·K).

In Experiment 4, the inner layer thermal insulation portion 113d and outer layer thermal insulation portion 113e in the embodiment of the present invention are not used. A total thickness of the thermal insulation unit 113 is 60mm. The specific structure is as follows: one layer of the combined structure of the nanometer thermal insulation material layer 113b (with a thickness of 40mm) + the aluminum foil (with a thickness of 0.02mm), and one layer of the combined structure of the nanometer thermal insulation material layer 113b (with a thickness of 20mm) + the aluminum foil (with a thickness of 0.02mm). The temperature of the hot surface is 562 °C, and the temperature difference between the hot surface and the cold surface is 16.8 °C. In this case, an average thermal conductivity of the thermal insulation unit 113 is 0.022 W/(m·K).

In Experiment 5, the inner layer thermal insulation portion 113d and the outer layer thermal insulation portion 113e in the embodiment of the present invention does not use. A total thickness of the thermal insulation unit 113 is 70mm. The specific structure is as follows: seven layers of the combined structure of the air gel felt layer (with a thickness of 10mm) and the aluminum foil (with a thickness of 0.02mm). The temperature of the hot surface is 562 °C, and the temperature difference between the hot surface and the cold surface is 14.3 °C. In this case, an average thermal conductivity of the thermal insulation unit 113 is 0.022 W/(m·K).

Therefore, in the tests conducted in the embodiment of the present invention, with a hot surface temperature of 562 °C, and a temperature difference between the hot and cold surfaces of <20 °C, when using the solution of the inner layer thermal insulation portion 113d and outer layer thermal insulation portion 113e, the thickness of the thermal insulation unit 113 can be as low as 43 mm (Experiment 1), and the average thermal conductivity can be as low as 0.016 W/(m·K). This represents a reduction of approximately 30% in thickness compared to Experiment 4, which uses the single nanometer thermal insulation material layer, and approximately 40% compared to Experiment 5, which uses the single air gel felt layer. Therefore, the thermal insulation unit 113 using the inner layer thermal insulation portion 113d and the outer layer thermal insulation portion 113e according to the embodiment of the present invention can have better thermal insulation performance and better meet the needs of miniaturized household applications.

In this embodiment, the intermediate interlayer does not need to be evacuated, meaning the intermediate interlayer can be in a non-vacuum state. This simplifies the design of the thermal insulation unit 113 and reduces the cost.

In some alternative embodiments, the thermal energy storage material 130 in the embodiment of the present invention can be an aluminum-silicon alloy.

The aluminum-silicon alloy material is capable of undergoing a phase change during the heat charging and the heat discharging processes. Thus, the thermal energy storage material 130 may simultaneously utilize latent heat of phase change and sensible heat of high temperature for thermal energy storage, thus having a higher energy density. Furthermore, compared to electrochemical energy storage, the thermal energy storage device 100 using aluminum-silicon alloy as the thermal energy storage material 130 is lower in cost, safer, has a longer service life, and the materials are easier to recycle, making it more environmentally friendly. Meanwhile, due to its relatively better thermal conductivity, during heat discharging, the aluminum-silicon alloy exhibits a higher heat discharging rate and a lower heat discharging cutoff temperature, allowing for more thorough utilization of the heat stored in the thermal energy storage device 100 provided in the embodiment of the present invention, resulting in higher energy utilization efficiency.

The preparation method of the aluminum-silicon alloy material can be varied and is not limited herein. In some embodiments, the aluminum-silicon alloy material may be prepared from electrolytic aluminum and silicon, or it can be prepared from scrap aluminum and silicon, with aluminum and silicon as its main components, and an effective silicon content in a range from 10% to 15%. The electrolytic aluminum may be either pure electrolytic aluminum or electrolytic aluminum ferrosilicon. The iron content of electrolytic aluminum ferrosilicon is in a range from 0.05% to 3%, with the balance being aluminum, and the total content of other elements is less than 0.2%. When using waste aluminum to prepare, other conventional elements in the waste aluminum below 5% can be considered impurities and are not included in the calculation. The total content of impurities should not exceed 10%, with the balance being aluminum.

After the thermal energy storage material 130 is added, a reserved space 111a-1 may be provided on the upper side of the thermal energy storage material 130 in the inner cavity 111a.

The aforementioned reserved space 111a-1 may serve as an expansion gap, which can accommodate the volume expansion of the thermal energy storage material 130 during heating and melting processes. This reduces the force exerted by the thermal energy storage material 130 on the inner container 111, thus significantly preventing the inner container 111 from being crushed and ruptured due to the volume expansion of the thermal energy storage material 130.

It should be understood that the above description of providing the thermal energy storage material 130 as the aluminum-silicon alloy material is only an exemplary illustration of the embodiment of the present invention and should not be construed as limiting the scope of the implementation of the thermal energy storage device 100 provided by the present invention. Other types of thermal energy storage material 130 may also be used, provided that the function is satisfied. For example, the thermal energy storage material 130 may be volcanic rock composite aluminum, which can store heat via solid sensible heat. Alternatively, the thermal energy storage material 130 may also be other phase change thermal energy storage materials such as hydrated salts, molten salts, paraffin waxes and the like.

The heat charging tube 120 may be inserted in the housing 110 and may be located at least partially in the inner cavity 111a to be in direct contact with the thermal energy storage material 130, thereby directly transferring heat to the thermal energy storage material 130 for storage.

A wall surface of the heat charging tube 120 that is in contact with the thermal energy storage material 130 may also be provided with the aforementioned corrosion resistant layer. Alternatively, the heat charging tube 120 may be configured as a double-layer structure, including a heat charging outer layer tube portion and a heat charging inner layer tube portion. The heat charging outer layer tube portion is the contact portion configured to be in direct contact with the thermal energy storage material 130, while the heat charging inner layer tube portion is the non-contact portion. The heat charging outer layer tube portion may be made of titanium alloy to improve corrosion resistant performance, while the heat charging inner layer tube section may be made of stainless steel to reduce the cost. Furthermore, since the heat charging outer layer tube section and the inner layer housing portion of the inner container are made of the same material, welding them together is more reliable and improves the connection strength between the heat charging tube 120 and the inner container 111.

In some optional embodiments, as shown in FIG. 1, the heat charging tube 120 may include a first tube portion 121 and a second tube portion 122. The first tube portion 121 may be a transition tube portion and may be inserted in the aforementioned first thermal insulation plates 113a. The second tube portion 122 may be a working tube portion and may be inserted in the aforementioned inner cavity 111a and further inserted in the thermal energy storage material 130 to directly transfer heat into the thermal energy storage material 130. The first tube portion 121 and the second tube portion 122 may be a single, integrally formed structure. Alternatively, the first tube portion 121 and the second tube portion 122 may be manufactured separately and then joined together. In this embodiment, the heat charging tube 120 may be considered to include only the second tube portion 122.

The outer container 112 may also be provided with a heat charging connection portion 114, so as to be connected to the heat charging apparatus. The heat charging connection portion 114 may specifically be an interface tube with a flange, which may be connected to the outer container 112 using welding or other processes to ensure sealing performance.

The number of heat charging tubes 120 may be multiple or single, depending on actual needs. It should be noted that when there are multiple heat charging tubes 120, there may also be multiple heat charging connection portions 114, and each heat charging connection portion 114 may be in one-to-one correspondence with each heat charging tube 120. In the embodiments shown in FIG. 1 and FIG. 2, the number of both the heat charging tubes 120 and the heat charging connection portions 114 may be only one.

Here, the embodiments of the present invention do not limit the energy source of the thermal energy storage device 100. In practical applications, those skilled in the art can determine the energy source according to specific needs.

In some embodiments, the energy source of the thermal energy storage device 100 in the embodiments of the present invention may be electrical energy.

As shown in FIG. 3, in this embodiment, the thermal energy storage device 100 provided by the present invention may further include an electric heat charging mechanism 150. The electric heat charging mechanism 150 may include an electric heat charging rod 151. The electric heat charging rod 151 acts as a resistor and may be connected to an external power supply via a connection cable 153. The electric heat charging rod 151 may be inserted in the heat charging tube 120. Thus, after the electric heat charging mechanism 150 is turned on, the electric heat charging rod 151 generates heat, and the heat may be transferred to the thermal energy storage material 130 for storage through the second tube portion 122 of the heat charging tube 120.

In a specific example, the electric heat charging rod 151 may be in contact with the inner wall surface of the heat charging tube 120, thus a gap between the electric heat charging rod 151 and the heat charging tube 120 is relatively small, leading to relatively high heat transferring efficiency between the electric heat charging rod 151 and the heat charging tube 120.

In practical applications, an outer diameter of the electric heat charging rod 151 and an inner diameter of the heat charging tube 120 may be configured to be basically the same. As such, after the electric heat charging rod 151 is inserted in the heat charging tube 120, an outer wall surface of the electric heat charging rod 151 may fit more closely with an inner wall surface of the heat charging tube 120. Alternatively, the outer wall surface of the electric heat charging rod 151 or the inner wall surface of the heat charging tube 120 may be provided with protrusions to achieve tight contact between the electric heat charging rod 151 and the heat charging tube 120. These protrusions may be of various forms, such as dot-shaped protrusions, block-shaped protrusions, or strip-shaped protrusions, and are not limited here.

In another specific example, as shown in FIG. 3, the electric heat charging mechanism 150 may also include a heat transferring sleeve 152. The heat transferring sleeve 152 may be sleeved outside the electric heat charging rod 151. An outer wall surface of the electric heat charging rod 151 may be in contact with an inner wall surface of the heat transferring sleeve 152, and an outer wall surface of the heat transferring sleeve 152 may be in contact with an inner wall surface of the heat charging tube 120. In this case, the heat transferring sleeve 152 acts as a transitional connection component, which can effectively eliminate a gap between the electric heat charging rod 151 and the heat charging tube 120, thereby improving the heat transfer efficiency between the electric heat charging rod 151 and the heat charging tube 120.

In practical applications, by controlling an inner diameter and an outer diameter of the heat transferring sleeve 152, tight contact between the heat transferring sleeve 152, the heat charging tube 120, and the electric heat charging rod 151 can be ensured. Alternatively, the aforementioned protrusion may be provided on one of the inner wall surface of the heat transferring sleeve 152 and the outer wall surface of the electric heat charging rod 151, and on one of the outer wall surface of the heat transferring sleeve 152 and the inner wall surface of the heat charging tube 120, so as to ensure tight contact between the heat transferring sleeve 152, the heat charging tube 120, and the electric heat charging rod 151.

The thickness of the heat transferring sleeve 152 may be determined according to actual needs, for example, may be in a range from 5mm to 20mm.

The aforementioned heat transferring sleeve 152 may be made of a metallic material, such as aluminum, copper, iron and the like, to ensure a relatively high thermal conductivity.

Alternatively, the heat transferring sleeve 152 may also be made of other non-metallic materials, as long as high thermal conductivity can be guaranteed. For example, the heat transferring sleeve 152 may be made of graphite. Graphite has high thermal conductivity, and also has many advantages such as light weight and high stability. Graphite can maintain its performance under different temperature and humidity environments, and has strong corrosion resistant performance, making it less prone to damage. For another example, the heat transferring sleeve 152 may also be made of carbide ceramics, such as silicon carbide, silicon boron nitride, or boron carbide. Taking silicon carbide as an example, silicon carbide possesses characteristics such as high hardness, high wear resistance, high thermal conductivity, and a low coefficient of thermal expansion. Accordingly, the heat transferring sleeve 152 made of silicon carbide material may exhibit relatively superior performance.

In addition, the electric heat charging mechanism 150 includes a planar electric heating component. This planar electric heating component is configured to be curled and can be arranged on an outer wall and/or a bottom surface of the inner container 111. In this case, the heat charging tube 120 may be omitted, allowing more space in the inner container 111 to fill the thermal energy storage material 130, thereby increasing the thermal energy storage capacity and density of the thermal energy storage device 100. This is also feasible.

As shown in FIG. 3, the electric heat charging mechanism 150 may include a joint butt 154, and the joint butt 154 may be connected to the heat charging connection portion 114. Specifically, the connection cable 153 may be specifically mounted on the joint butt 154. The joint butt 154 may also be a sintered glass vacuum joint for easy disassembly and replacement, while also ensuring a better internal vacuum in the thermal insulation cavity 112a.

In this embodiment, the source of electrical energy may be a power generation system such as a coal-fired power plant, a photovoltaic power plant, or a wind power plant, or may be the power grid. For details, please refer to the description of the thermal energy storage system later.

In some other embodiments, the energy source of the thermal energy storage device 100 in the embodiment of the present invention may be light energy.

In this embodiment, the heat charging module of the thermal energy storage device 100 may further include a photothermal charging mechanism (not shown). The photothermal charging mechanism may include a light transmission component, such as an optical fiber. The light transmission component is configured to transmit light into the heat charging tube 120, directly heating the heat charging tube 120 using light energy. The heat charging tube 120 then transfers the heat energy to the thermal energy storage material 130 for storage.

This configuration enables direct conversion of light energy into heat energy. Compared to embodiment that use photovoltaic power generation as a power source and then generate heat energy from electricity (with an energy conversion efficiency typically around 20%), this embodiment eliminates the photovoltaic power generation process, reduces energy conversion steps, achieves a higher photothermal conversion rate, and significantly improves the utilization of light energy.

When using a photothermal charging mechanism, an inner hole of the heat charging tube 120 may be a hole with uniform cross-sections. Alternatively, an inner hole of the heat charging tube 120 may be a hole with gradually reduced cross-section in a direction away from the light transmission component. This allows for more uniform reception of light energy and improves the temperature uniformity of the heated surface of the heat charging tube 120. Alternatively, at least a partial section of the inner hole section of the heat charging tube 120 may be provided with internal threads or engaging slots to achieve a fixed connection.

Furthermore, the photothermal charging mechanism may also include a light guiding component. The light transmission component may be connected to the light guiding component, which may be, for example, a quartz tube. The light guiding component is configured to guide the light transmitted by the light transmission component to the inner wall surface of the heat charging tube 120.

Specifically, the light guiding component may scatter light onto the inner wall surface of the heat charging tube 120. This allows more regions of the inner wall surface of the heat charging tube 120 to receive light, reduces the possibility of concentrated irradiation in localized regions of the inner wall surface of the heat charging tube 120, and prevents excessively high local temperatures in the heat charging tube 120. This improves the stability of the photothermal charging process and reduces the energy of infrared radiation emitted from the heat charging connection portion 114, thereby improving the efficiency of light energy utilization.

A sealing component may also be provided in the heat charging connection portion 114 to reduce light escaping. Specifically, this sealing component may be a light-transmitting material, such as a semi-transparent film, which exhibits high transmittance under visible light and short-wavelength infrared conditions (e.g., <3000nm), but high reflectivity under long-wavelength conditions. This significantly reduces the energy of infrared radiation emitted from the heat charging connection portion 114, thereby maximizing light energy utilization efficiency.

In practical applications, the aforementioned electric heat charging mechanism 150 and photothermal charging mechanism may coexist. In this case, the thermal energy storage device 100 provided in the embodiment of the present invention may simultaneously contain a plurality of heat charging tubes 120, allowing for different heating methods at different positions to heat the thermal energy storage material 130, which is beneficial for improving heat charging efficiency.

During the heating process, the thermal energy storage material 130 close to the heat charging tube 120 will melt firstly. After this portion of thermal energy storage material 130 is melted, due to natural convection, a significant temperature difference will appear between a top portion and a bottom portion of the thermal energy storage material 130, easily causing the temperature of the liquid thermal energy storage material 130 at the top portion to become too high, forming localized high-temperature regions.

To address this, as shown in FIG. 4, in the embodiment of the present invention, an outer wall of the heat charging tube 120 may be provided with a flow suppression structure 122a. This flow suppression structure 122a may effectively suppress the natural convection velocity of the liquid thermal energy storage material 130, thereby reducing the temperature difference between the top portion and the bottom portion of the thermal energy storage material 130 and improving the temperature uniformity of various regions of the thermal energy storage material 130, thus reducing the formation of localized high-temperature regions.

The flow suppression structure 122a may specifically be an annular plate, and the number thereof may be one or more, depending on the actual application requirements. Specifically, in FIG. 4, there may be two annular plates, which are arranged spaced apart along an axial direction of the heat charging tube 120.

The annular plate may be a horizontal plate. Alternatively, the annular plate may be an upwardly or downwardly inclined plate. In some embodiments, this inclined plate may also be referred to as a conical plate. The directional descriptions of "upper" and "lower" here are based on the orientation and positional relationships shown in FIG. 4.

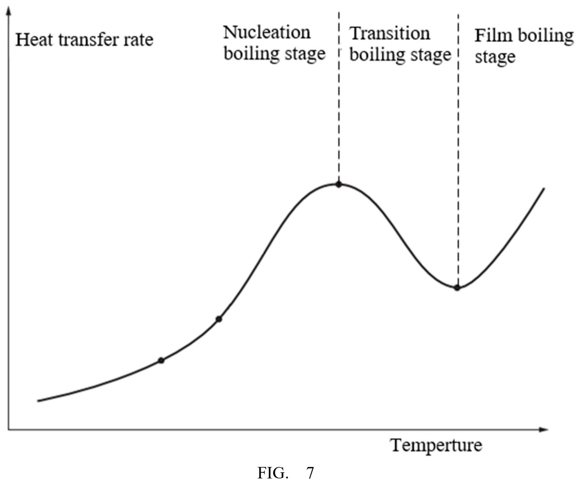

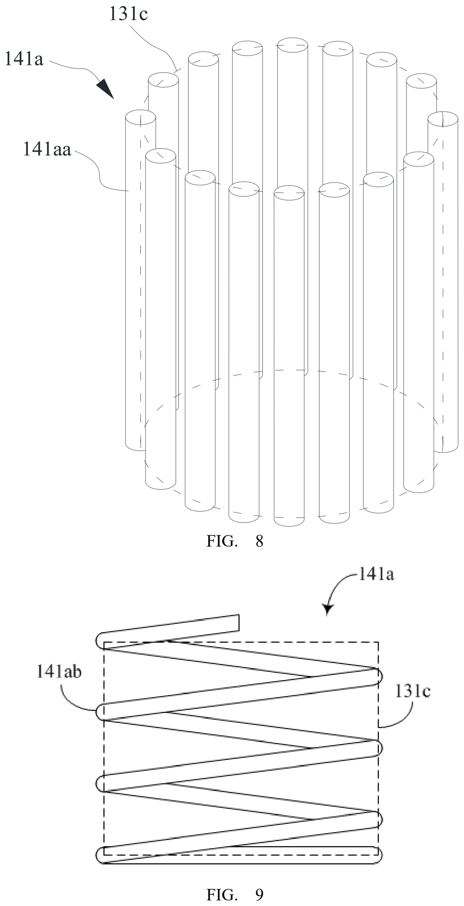

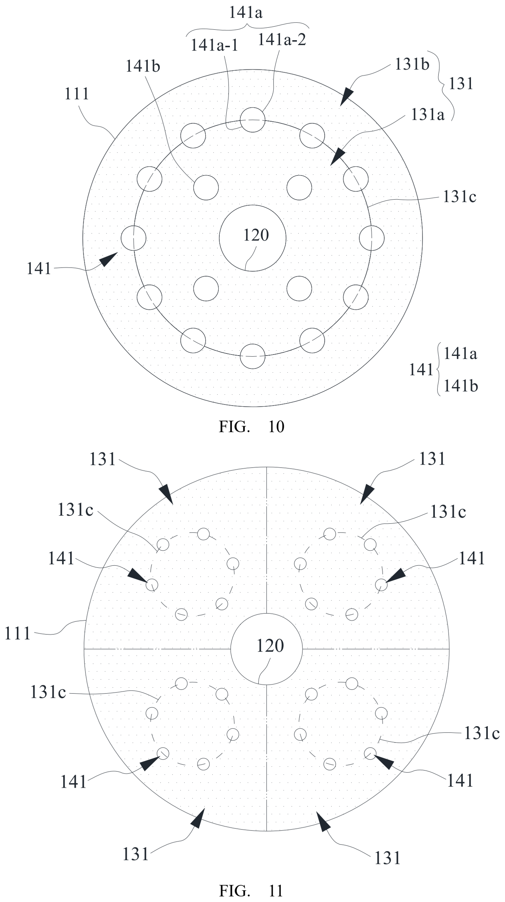

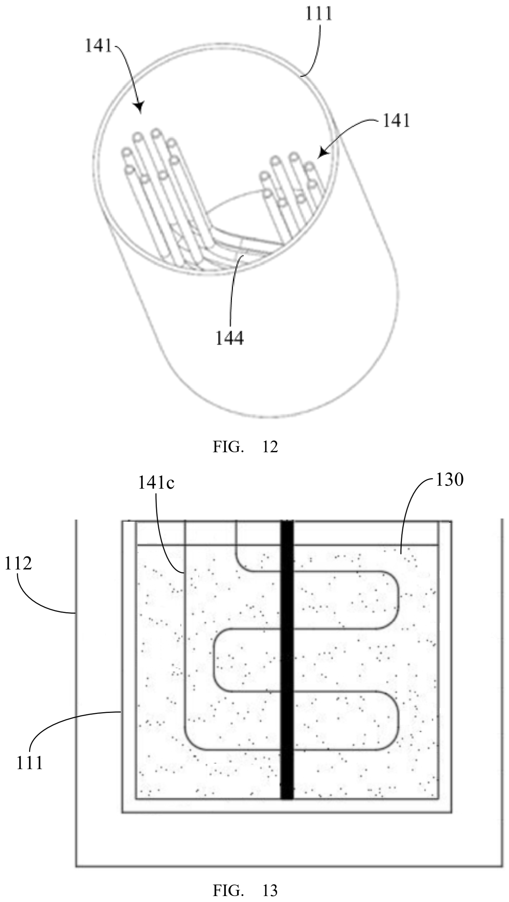

Referring to FIG. 6 to FIG. 13, FIG. 6 is a distribution diagram of an embodiment of the heat discharging unit in the thermal energy storage material; FIG. 7 is a boiling heat transfer curve; FIG. 8 is a schematic diagram of an embodiment of the first heat discharging tube; FIG. 9 is a schematic diagram of another embodiment of the first heat discharging tube; FIG. 10 is a distribution diagram of another embodiment of the heat discharging unit in the thermal energy storage material; FIG. 11 is a distribution diagram of another embodiment of the heat discharging unit in the thermal energy storage material; FIG. 12 is a schematic diagram of a heat discharging tube in an inner container; FIG. 13 is a schematic diagram of a third heat discharging tube in the thermal energy storage material;

As shown in FIG. 6, the thermal energy storage material 130 is at least located on the outer periphery of the heat charging tube 120, and the thermal energy storage material 130 includes a thermal energy storage module 131. The thermal energy storage module 131 includes an inner layer portion 131a and an outer layer portion 131b. The inner layer portion 131a is located on an inner side of the outer layer portion 131b and is closer to the heat charging tube 120 than the outer layer portion 131b. Both the inner layer portion 131a and the outer layer portion 131b extend along an axial direction of the heat charging tube 120. The thermal energy storage module 131 has a cylindrical boundary surface 131c between the inner layer portion 131a and the outer layer portion 131b. The boundary surface 131c is not a surface of a solid component, but rather a virtual surface created in the embodiment of the present invention to clearly illustrate the extent of the inner layer portion 131a and the outer layer portion 131b. The inner layer portion 131a and the outer layer portion 131b remain connected at boundary surface 131c and are not separated. Furthermore, the boundary surface 131c may be a circular cylinder, or may be a triangular cylinder, a square cylinder, or a cylindrical structure with other cross-sectional shapes, which is not limited hereto.

The heat discharging unit 140 includes a heat discharging module 141. When there is one thermal energy storage module 131, there may also be one heat discharging module 141, and this heat discharging module 141 may be located in the thermal energy storage module 131.

When the heat stored in the thermal energy storage device 100 needs to be used, a heat exchange medium may be introduced into the heat discharging module 141. As the heat exchange medium flows through the heat discharging module 141, the heat stored in the thermal energy storage material 130 can be taken away. Specifically, the heat exchange medium may be water. After flowing through the heat discharging module 141, the water may boil to form steam and then be released to the outside. Taking an aluminum-silicon alloy as the thermal energy storage material 130 as an example, during the heat discharging process, the temperature of the thermal energy storage material 130 may drop from above 560°C to below 200°C. Under different temperature conditions, the heat exchange state and the amount of heat exchanged in the heat discharging module 141 will change. If this is not controlled, it will affect the stability of the heat discharging process of the thermal energy storage device 100 provided in the embodiment of the present invention, thus affecting use.

To address this, in the embodiment of the present invention, the heat discharging module 141 includes at least one first heat discharging tube 141a arranged along an axial direction and a circumferential direction of the boundary surface 131c. A tube wall of the first heat discharging tube 141a may be divided by the boundary surface 131c, such that the tube wall of the first heat discharging tube 141a is divided into an inner side wall portion 141a-1 and an outer side wall tube 141a-2 in the circumferential direction thereof. The inner side wall portion 141a-1 is located in the inner layer portion 131a and the outer side wall tube 141a-2 is located in the outer layer portion 131b.

As shown in FIG. 7, under boiling heat transfer conditions, as the temperature of the wall surface increases, the boiling in the first heat discharging tube 141a will gradually undergo a nucleation boiling stage, a transition boiling stage, and a film boiling stage. In the nucleation boiling stage, the heat transfer rate increases with increasing wall temperature. However, in the transition boiling stage, the heat transfer rate decreases with increasing wall temperature.

Specifically, in the embodiment of the present invention, since the first heat discharging tube 141a is distributed along both the axial direction and the circumferential direction of the boundary surface 131c, the first heat discharging tube 141a may form a significant "thermal insulation zone" along the boundary surface 131c, thereby ensuring that during the heat discharging process, the temperature of the inner layer portion 131a is lower than the temperature of the outer layer portion 131b. Accordingly, in the embodiment of the present invention, the tube wall of the first heat discharging tube 141a is further divided into an inner side wall portion 141a-1 and an outer side wall tube 141a-2 in a circumferential direction thereof. The inner side wall portion 141a-1 is located in the inner layer portion 131a with a relatively lower temperature, while the outer side wall tube 141a-2 is located in the outer layer portion 131b with a relatively higher temperature. Thus, as the temperature of the thermal energy storage material 130 continuously decreases, the inner side wall portion 141a-1 may be in the nucleation boiling stage, while the outer side wall tube 141a-2 may be in the transition boiling range. The heat transfer rate of the inner side wall portion 141a-1 decreases with decreasing temperature, while the heat transfer rate of the outer side wall tube 141a-2 increases with decreasing temperature. These two rates cancel each other out, effectively stabilizing the total heat transfer and facilitating the use of the thermal energy storage device 100 provided in the embodiment of the present invention as a stable heat source.

Here, the embodiment of the present invention does not limit the specific structural form and arrangement manner of the first heat discharging tube 141a. In practical applications, those skilled in the art can determine it according to specific needs, as long as it meets the requirements of use.

In some embodiments, as shown in FIG. 8, the first heat discharging tube 141a may include a plurality of first tube sections 141aa. The projection of each first tube section 141aa in the axial direction of the boundary surface 131c does not cover the projection of the boundary surface 131c in the axial direction thereof. Each first tube sections 141aa are spaced apart along the circumference direction of the boundary surface 131c. In this embodiment, the number of the first tube sections 141aa may be greater than or equal to three, which allows the first tube sections 141aa to be arranged more evenly along the circumferential direction of the boundary surface 131c, thus better forming the aforementioned "thermal insulation zone".

The aforementioned first tube section 141aa may be a straight tube section, as shown in FIG. 8. In this case, the projection of the first tube section 141aa in the axial direction of the boundary surface 131c may be a "point", which should be understood to have a certain area. Correspondingly, the projections of all first tube sections 141aa in the axial direction of the boundary surface 131c are a plurality of "points" spaced apart, and the total projection of all first tube sections 141aa in the axial direction of boundary surface 131c cannot cover the projection of the boundary surface 131c in the axial direction thereof.

In addition, the aforementioned first tube section 141aa may also be a curved tube, such as an arc-shaped tube or part of a spiral tube. In this case, the projection of the first tube section 141aa in the axial direction of the boundary surface 131c may be a "line segment," which should be understood to have a certain width. In this solution, although the projection of a single first tube section 141aa in the axial direction of the boundary surface 131c cannot cover the projection of the boundary surface 131c in the axial direction thereof, the total projection of all first tube sections 141aa in the axial direction of boundary surface 131c may cover the projection of the boundary surface 131c in the axial direction thereof. This is specifically related to the shape and arrangement number of the first tube sections 141aa. Furthermore, due to the existence of the bending region, the curved tube enables the fluid inside to generate centrifugal force, and the fluid can be adhered more closely to the tube wall, which is inherently beneficial for improving the heat transferring rate.

In some embodiments, as shown in FIG. 9, the first heat discharging tube 141a may include at least one second tube section 141ab, and the projection of the second tube section 141ab in the axial projection of the boundary surface 131c can cover the projection of the boundary surface 131c in the axial direction thereof. Thus, the thermal insulation effect achievable by the first heat discharging tube 141a itself can be improved.

In this embodiment, the second tube section 141ab can be an annular tube or a spiral coil. The annular tube or spiral coil, due to the existence of the bending region, enables the fluid inside to generate centrifugal force, and the fluid can be adhered more closely to the tube wall, which is beneficial for increasing the heat transfer rate. For example, FIG. 9 illustrates the embodiment of the spiral coil. When there are a plurality of spiral coils, each spiral coil extends along both the axial direction and the circumferential direction of the boundary surface 131c, and the spiral coils are staggered from each other in the circumferential direction. This results in a better insulation effect for the "insulation zone" formed by the combination of the plurality of spiral coils.

In fact, in practical applications, both aforementioned implementations may be used simultaneously. That is, the first heat discharging tube 141a may also include both the aforementioned first tube section 141aa and second tube section 141ab located in different axial regions of the boundary surface 131c, respectively. For example, the second tube section 141ab may be a ring tube, which may be distributed at both ends of the first tube section 141aa to serve as a manifold at both ends of the first tube section 141aa. This not only improves the thermal insulation effect, but also establishes a structural connection between each first tube sections 141aa at both ends of the first tube section 141aa, and also improves the structural strength of the first heat discharging tube 141a.

In some optional embodiments, as shown in FIG. 10, the heat discharging module 141 may further include at least one second heat discharging tube 141b, which may be inserted in the inner layer portion 131a. In this case, the tube wall of the second heat discharging tube 141b may be equivalent to the inner side wall portion 141a-1 of the aforementioned first heat discharging tube 141a. This allows adjustment of the proportion of the wall portions in contact with the inner layer portion 131a and the outer layer portion 131b in the heat discharging module 141, thereby increasing the adjustability of the thermal energy storage device 100 provided in the embodiment of the present invention and further facilitating the stability of the total heat exchange.

It should be understood that the aforementioned second heat discharging tube 141b may also be located in the outer layer portion 131b, depending on the specific application requirements.

The portions of the heat discharging module 141 in contact with the thermal energy storage material 130 (e.g., the first heat discharging tube 141a and the second heat discharging tube 141b) may also be provided with the aforementioned corrosion resistant layer to improve their corrosion resistant performance. Alternatively, the portions of the heat discharging module 141 and the thermal energy storage material 130 in contact with each other may also have a double-layer structure, including an outer heat discharging tube portion and an inner heat discharging tube portion. The outer heat discharging tube portion is a contact portion configured to be in direct contact with the thermal energy storage material 130, while the inner heat discharging tube portion is a non-contact portion. The outer heat discharging tube section may be made of titanium alloy to improve corrosion resistant performance, while the inner heat discharging tube portion may be made of stainless steel to reduce costs. Furthermore, since the outer heat discharging tube portion and the inner layer housing portion of the inner container are made of the same material. The outer heat discharging tube portion and the inner layer housing portion of the inner container are welded together using the welding process, which is more conducive to ensuring the reliability of the weld and improving the connection strength between the heat discharging tube 120 and the inner container 111.

In the embodiments shown in FIG. 6 and FIG. 10, there is one heat charging tube 120, one thermal energy storage module 131, and one heat discharging module 141. The thermal energy storage module 131 is equivalent to all the thermal energy storage material 130. Both the thermal energy storage module 131 and the boundary surface 131c are arranged around a central axis of the heat charging tube 120. Thus, the structure form of the thermal energy storage device 100 provided in the embodiment of the present invention is relatively simple, and the manufacturing cost is low.

In addition, in some other embodiments of the embodiment of the present invention, there may be a plurality of thermal energy storage modules 131, as shown in FIG. 11 and FIG. 12. In this case, each thermal energy storage module 131 may be provided with one heat discharging module 141, and each thermal energy storage module 131 may form a boundary surface 131c. Each heat discharging modules 141 may in communication with each other through communication tubes 144, which may also be configured to discharge heat. In this embodiment, the number of the heat charging tubes 120 may be one or more. For example, the number of the heat charging tubes 120 may be consistent with the number of the thermal energy storage modules 131, and each heat charging tube 120 may be inserted in the inner layer portion 131a of each thermal energy storage module 131.

Additionally, in some other embodiments of the embodiment of the present invention, as shown in FIG. 13, the heat discharging module 141 may further include a third heat exchange tube 141c. At least a portion of the tube section of the third heat exchange tube 141c may be a bending portion, so as to increase the size of the third heat exchange tube141c. A central axis of the third heat exchange tube 141c may be located in the same plane, which is also a feasible embodiment.

In other embodiments of the present invention, at least a portion of the heat discharging tube in the heat discharging module 141 may also be provided on the outer wall of the inner container 111, i.e., the heat discharging tube may also be provided in the intermediate interlayer, which is also a feasible embodiment. In this embodiment, the heat exchange tube may be arranged along an outer periphery of the inner container 111, and may have various shapes, such as annular, spiral coil, and straight and the like, which is not limited thereto.

The heat discharging unit 140 may further include a heat discharging inlet tube 142 and a heat discharging outlet tube 143. Both the heat discharging inlet tube 142 and the heat discharging outlet tube 143 may be located in the thermal insulation cavity 112a and be in insertion fit with the first thermal insulation plates 113a. Both the heat discharging inlet tube 142 and the heat discharging outlet tube 143 may be connected to the heat discharging module 141 to introduce and discharge the heat exchange medium into and out of the heat discharging module 141.

Furthermore, the housing 110 may also be provided with a heat discharging inlet connection portion 115 and a heat discharging outlet connection portion 116, the structure of which is consistent with the aforementioned heat charging connection portion 114. The heat discharging inlet connection portion 115 can be connected to the heat discharging inlet tube 142, and the heat discharging outlet connection portion 116 can be connected to the heat discharging outlet tube 143. Both the heat discharging inlet connection portion 115 and the heat discharging outlet connection portion 116 are also configured to be connected to an external heat discharging apparatus.

The heat discharging apparatus is configured to supply heat exchange medium to the thermal energy storage device 100 and to remove the heat exchange medium after heat exchange. The specific structure of the heat discharging apparatus may be described later.

A temperature detection component, such as a thermocouple sensor, may also be mounted inside the housing 110 to detect the real-time temperature of the thermal energy storage material 130. This real-time temperature may include the real-time temperature value of the inner layer portion 131a and the real-time temperature value of the outer layer portion 131b. This temperature detection component may also be connected to the aforementioned signal connection portion 117, thereby improving the integration degree of the signal connection portion 117.

In addition, the thermal energy storage device 100 also includes a backup power supply, such as a lithium battery, to power various types of sensors, control devices, etc., in the event of a power outage, such that the thermal energy storage device 100 may still be used in the event of a power outage.

In the embodiment of the present invention, the heat charging operation and the heat discharging operation may be performed simultaneously, or they can be performed separately, which is not limited thereto.

As can be seen from the above, the thermal energy storage device 100 provided by the embodiment of the present invention may have higher energy density and power density, higher safety, longer service life, and is more conducive to miniaturization, facilitating the home application of the thermal energy storage device 100.

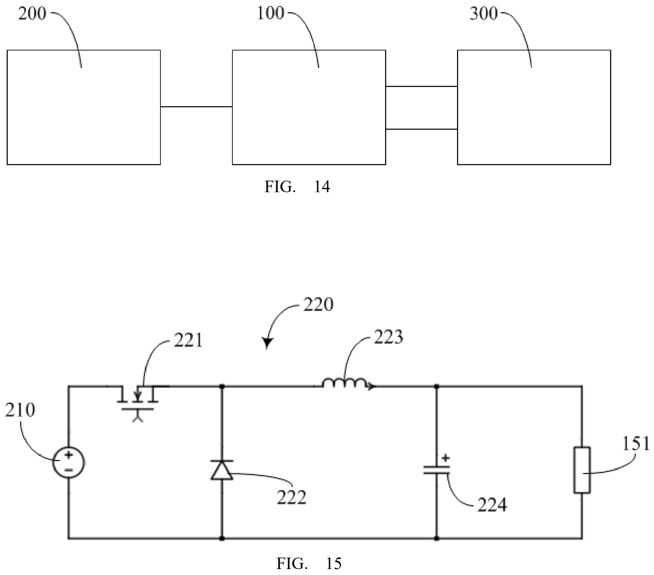

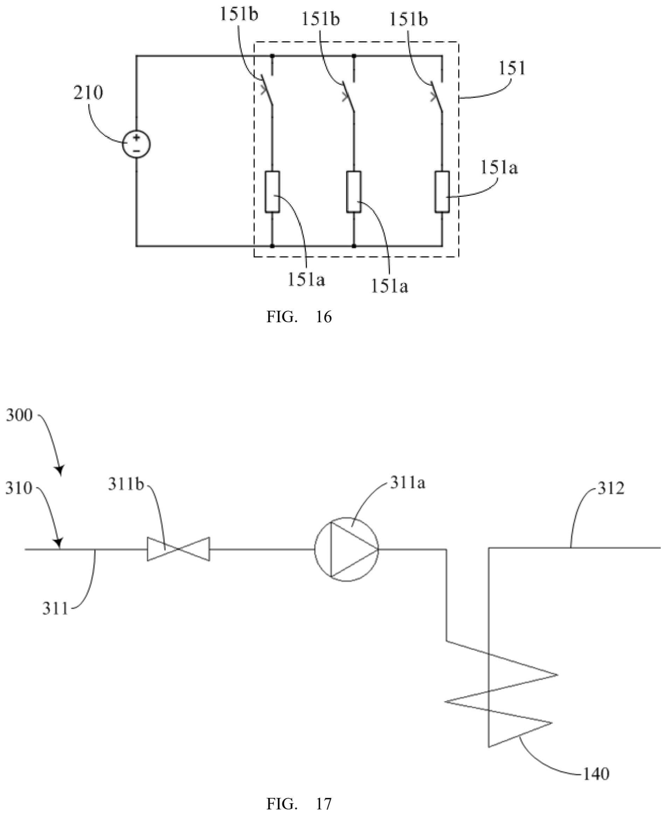

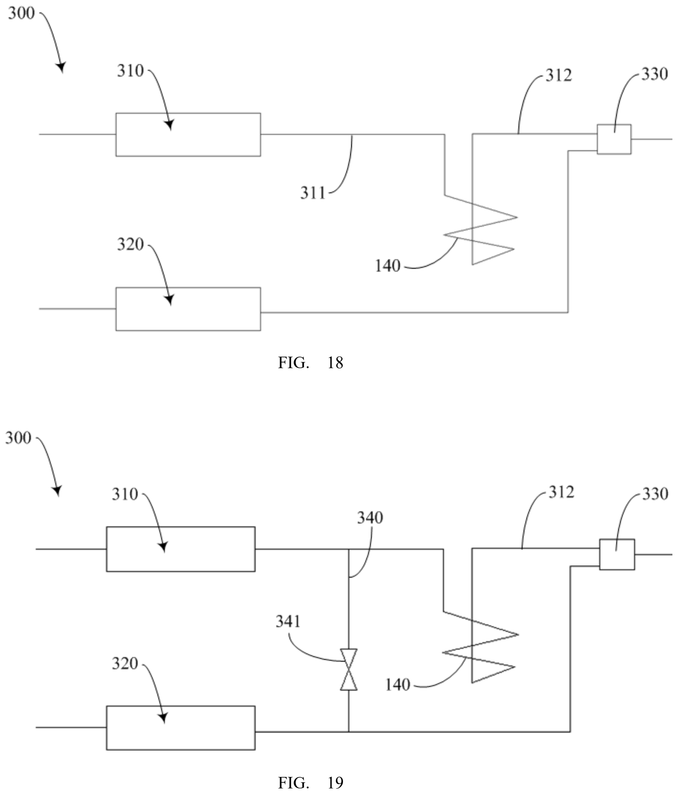

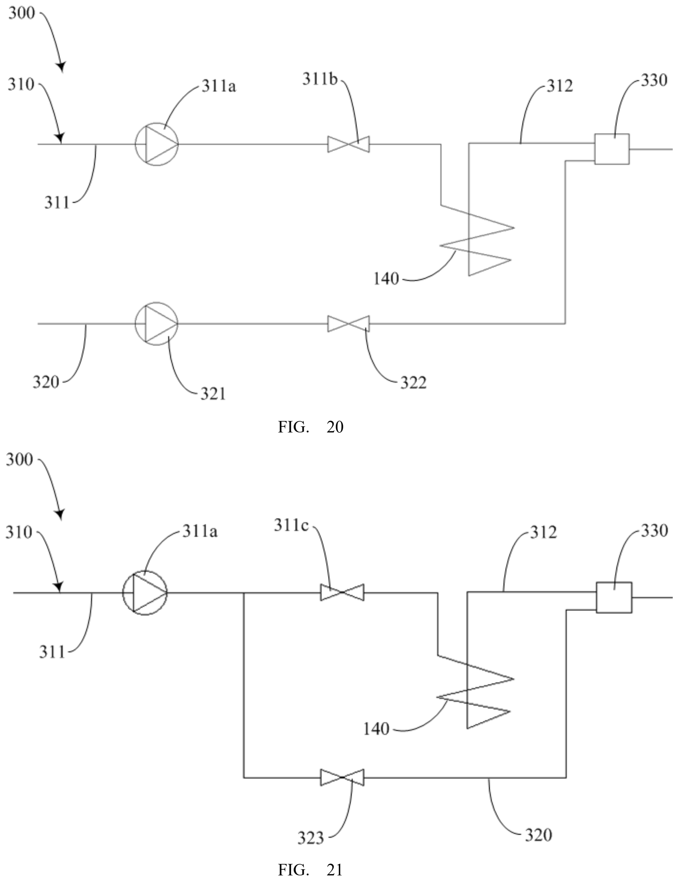

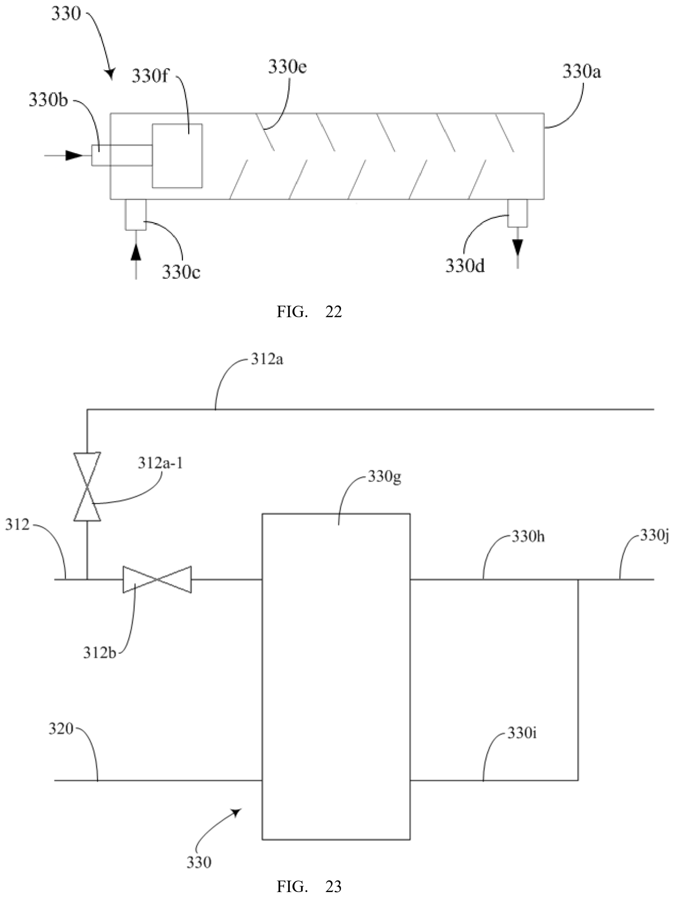

Referring to FIG. 14 to FIG. 23, FIG. 14 is a schematic diagram of a thermal energy storage system according to the present invention; FIG. 15 is a circuit diagram of an embodiment of a voltage adjustment component; FIG. 16 is a circuit diagram of an embodiment of an adjustable resistor; FIG. 17 is a schematic diagram of a steam supply mechanism; FIG. 18 is a schematic diagram of a hot water supply mechanism; FIG. 19 is a schematic diagram of another hot water supply mechanism; FIG. 20 is a schematic diagram of yet another hot water supply mechanism; FIG. 21 is a schematic diagram of still another hot water supply mechanism; FIG. 22 is a schematic diagram of a steam-water mixing component; FIG. 23 is a schematic diagram of another steam-water mixing component.

As shown in FIG. 14, the present invention provides a thermal energy storage system, including a thermal energy storage device 100, a heat charging apparatus 200, and a heat discharging apparatus 300. The thermal energy storage device 100 may be any of the thermal energy storage devices 100 described in the aforementioned embodiments. The heat charging apparatus 200 is configured to be connected to the heat charging tube 120 to provide a heat source, including electricity and/or light, to charge heat to the thermal energy storage device 100. The heat discharging apparatus 300 is configured to be connected to the heat discharging unit 140 to provide a heat exchange medium outside, which may specifically include water, steam, oil, etc., thereby utilizing the heat in the thermal energy storage device 100.

Since the aforementioned thermal energy storage device 100 already possesses the technical effects described above, the thermal energy storage system with this thermal energy storage device 100 should also possess similar technical effects, and therefore will not be elaborated upon here.

In some optional embodiments, the heat charging apparatus 200 may be a power supply mechanism. For example, this power supply mechanism may be a wind power generation mechanism, a photovoltaic power generation mechanism, a hydropower generation mechanism, a coal-fired power generation mechanism, or other power generation mechanisms capable of directly generating electricity. In this implementation, the thermal energy storage device 100 according to the embodiment of the present invention may serve as the sole energy storage device for these power generation mechanisms, so as to utilize the electrical energy generated by these power generation mechanisms to produce heat, and then store the heat energy. Alternatively, the thermal energy storage device 100 according to the embodiment of the present invention may also serve as an auxiliary energy storage device, which can be used only when energy is abundant (e.g., when the wind is strong for a wind turbine, or when the sunlight is strong for a photovoltaic power generation mechanism at midday), utilizing surplus electrical energy to generate heat for storage. For another example, the power supply may also be the power grid. In this case, the thermal energy storage device 100 may utilize off-peak electricity from the grid at night to generate and store heat, making full use of idle electricity and effectively reducing thermal energy storage costs. Then, during the day when electricity prices are high, the heat is discharged through the heat discharging apparatus 300. With this configuration, the thermal energy storage system provided by the embodiment of the present invention can achieve energy allocation, effectively resolving the temporal contradiction between energy supply and demand in the power system, significantly improving the overall efficiency of energy utilization, and effectively reducing energy usage costs.

It should be understood that the output characteristics of an unstable energy generation mechanisms 210, such as the wind power mechanism, the photovoltaic power generation mechanism, etc., are significantly affected by natural conditions (light intensity, wind force, etc.), and the load resistance corresponding to the maximum power point under different natural conditions is also different. Specifically, in the embodiment of the present invention, the aforementioned electric heat charging rod 151 serves as the load resistance. When the resistance of the electric heat charging rod 151 remains constant, changes in the output characteristics of the wind power generation mechanism or photovoltaic power generation mechanism will inevitably lead to certain moments where the actual output efficiency is lower.

To address this, in the embodiment of the present invention, the heat charging apparatus 200 further includes a voltage adjustment component 220. The unstable energy generation mechanism 210 may be connected to the power supply mechanism 150 via the voltage adjustment component 220. The voltage adjustment component 220 is configured to adjust the voltage on both sides of the power supply mechanism 150, enabling real-time tracking of the maximum power point under different power supply conditions to improve output efficiency.

Here, the embodiment of the present invention does not limit the specific structural form of the voltage adjustment component 220. In practical applications, those skilled in the art may arrange according to the specific type of power supply mechanism and other actual conditions, as long as it meets the requirements of use. Taking a photovoltaic power generation mechanism as an example, the voltage adjustment component 220 may be a DC-DC circuit. The DC-DC circuit may be a Boost circuit, a Buck circuit, a Buck-Boost circuit, etc. Taking a Buck circuit as an example, as shown in FIG. 15, the Buck circuit may include a field effect transistor 221, a diode 222, an inductor 223, and a capacitor 224. A transformer coefficient can be adjusted by adjusting a duty cycle of the field effect transistor 221. To obtain a better transformation coefficient, a constant voltage tracking method may be used, which stabilizes the output voltage of the unstable energy generation mechanism 210 at a set value, thereby achieving real-time maximum power output (generally, the output voltage Uₘₚₚ corresponding to the maximum power point of the photovoltaic power generation mechanism is stable); alternatively, a perturbation method may also be used.

In fact, besides the embodiment of setting the voltage adjustment component 220 as described above, an adjustable resistor may also be provided for the power supply mechanism 150, that is, the resistance value of the electric heat charging rod 151 may be set to be adjustable, which can also improve output efficiency.

The structure of the adjustable resistor may also vary, and those skilled in the art can select according to specific needs in practical applications. In some embodiments, as shown in FIG. 16, the electric heat charging rod 151 may include a plurality of optional resistors 151a that are connected in parallel. Each optional resistor 151a is connected to a relay switch 151b. By opening and closing the relay switch 151b, the number of the optional resistors 151a connected may be adjusted, thereby adjusting the resistance of the electric heat charging rod 151 to achieve maximum power point tracking. This solution avoids excessive power electronic components, and has a simple structure, high reliability, and low cost.

For embodiments using the adjustable resistor, the maximum output power may be obtained through voltage tracking. That is, when the output voltage is higher than the set voltage, the resistance value is decreased; otherwise, the resistance value is increased. Alternatively, a perturbation method may be used to obtain the maximum output power.

In some optional embodiments, the heat charging apparatus 200 may be a light supply mechanism. The light supply mechanism may include a light-receiving component that may directly guide light into the heat charging tube 120 to directly generate heat through light, and then store the heat. Compared to the solution of photovoltaic power generation and the reuse of electrical energy for thermal energy storage, the light supply mechanism may directly utilize light energy, with fewer energy conversion steps and higher conversion efficiency.

In some optional embodiments, the heat discharging apparatus 300 may include a steam supply mechanism 310.

As shown in FIG. 17, the steam supply mechanism 310 may include a first water channel 311 and a first vapor channel 312. Both the first water channel 311 and the first vapor channel 312 may be connected to the heat discharging unit 140. The first water channel 311 may be located upstream of the thermal energy storage device 100, so as to supply cold water to the heat discharging unit 140. After passing through the heat discharging unit 140, the cold water boils and becomes steam. The first vapor channel 312 may be located downstream of the thermal energy storage device 100, so as to extract the steam. Here, "upstream" refers that the heat exchange medium flows into the heat discharging inlet tube (an input end of the heat discharging unit) of the heat discharging unit, and "downstream" refers that the heat exchange medium flows out of the heat discharging outlet tube (an output end of the heat discharging unit) of the heat discharging unit.

The first water channel 311 may be provided with a first pump body 311a and a second proportional valve 311b. The first pump body 311a provides the pumping drive force. The second proportional valve 311b allows for the on/off regulation and flow rate regulation of the first water channel 311.

As shown in FIG. 18, in the embodiment of the present invention, the heat discharging apparatus 300 may further include a second water channel 320, which is also configured to provide cold water. The first vapor channel 312 may be connected to a steam-water mixing component 330, and the second water channel 320 and the steam-water mixing component 330 may be in communication with each other. Thus, the steam provided by the first vapor channel 312 and the cold water provided by the second water channel 320 may be mixed in the steam-water mixing component 330 to generate hot water.

As shown in FIG. 19, a communication channel 340 may be provided between the first water channel 311 and the second water channel 320, and the communication channel 340 may be provided with a first proportional valve 341. When the temperature of the thermal energy storage material 130 is too low to generate sufficient steam using the cold water in the first water channel 311, the first proportional valve 341 may be opened and the first water channel 311 may be closed. This allows cold water from the second water channel 320 to be directly supplied to the thermal energy storage device 100, thereby generating hot water.

As shown in FIG. 20, the first water channel 311 and the second water channel 320 may also be independent from each other. The first water channel 311 may be provided with a first pump body 311a and a second proportional valve 311b, while the second water channel 320 may be provided with a second pump body 321 and a third proportional valve 322. By adjusting the opening of the second proportional valve 311b and the third proportional valve 322, the flow rates of the first water channel 311 and the second water channel 320 may be adjusted, thereby adjusting the outlet temperature of the steam-water mixing component 330.

In fact, the second proportional valve 311b and the third proportional valve 322 may be omitted, and the first pump body 311a and the second pump body 321 may be configured as pumps capable of flow rate regulation. This would also achieve the purpose of flow rate regulation for the first water channel 311 and the second water channel 320, while reducing the number of components and simplifying the structure.

As shown in FIG. 21, the first water channel 311 and the second water channel 320 may also be connected to each other. In this case, the first water channel 311 and the second water channel 320 essentially share a common water source and share the first pump body 311a, thus further reducing the number of components and simplifying the structure. A downstream tube of a connection point between the first water channel 311 and the second water channel 320 may be provided with a fourth proportional valve 311 c. The second water channel 320 may be provided with a fifth proportional valve 323. The flow rates of the first water channel 311 and the second water channel 320 may be adjusted via the fourth proportional valve 311c and the fifth proportional valve 323, thereby regulating the outlet temperature of the steam-water mixing component 330.

As shown in FIG. 22, the steam-water mixing component 330 may include a mixer 330a, a steam inlet portion 330b, a water inlet portion 330c, and an outlet portion 330a. The steam inlet portion 330b, the water inlet portion 330c, and the outlet portion 330d may all be connected to the mixer 330a. The mixer 330a may be further provided with a diffuser 330f therein. The steam inlet portion 330b may be connected to the diffuser 330f, and an inner wall surface of the mixer 330a may also be provided with a spoiler structure 330e.

In the aforementioned solution, the diffuser 330f can reduce noise generated during steam-water mixing, while the spoiler structure 330e can improve the mixing rate and the heat exchange efficiency of steam and water. The advantages of the aforementioned steam-water mixing component 330 include small size, fast heat exchange rate, no heat loss, and no steam condensate.

As shown in FIG. 23, the embodiment of the present invention further provides another steam-water mixing component 330, including a heat exchanger 330g, a first outlet tube 330h, a second outlet tube 330i, and a main outlet tube 330j. The heat exchanger 330g may specifically be a plate-type heat exchanger, etc., which may form a first medium channel and a second medium channel therein. The first vapor channel 312 and the first outlet tube 330h may both be in communication with the first medium channel, and the second water channel 320 and the second outlet tube 330i may both be in communication with the second medium channel. The first outlet tube 330h and the second outlet tube 330i may both be connected to the main outlet tube 330j. The steam provided by the first vapor channel 312 and the water provided by the second water channel 320 may first exchange heat in the heat exchanger 330g, and then be mixed in the main outlet tube 330j through the first outlet tube 330h and the second outlet tube 330i. This reduces noise during the steam-water mixing process.

In this solution, the first vapor channel 312 may also be connected to a bypass branch 312a. The bypass branch 312a may be provided with a sixth proportional valve 312a-1, and the downstream section of the first vapor channel 312 at its connection point with the bypass branch 312a may be provided with a seventh proportional valve 312b. When hot water is not required, the sixth proportional valve 312a-1 may be opened, and the seventh proportional valve 312b may be closed. The heat discharging apparatus 300 may then directly supply steam through the bypass branch 312a.

In the embodiment of the present invention, because the heat discharging apparatus 300 involves relatively many tubes and steam transport, to ensure safety, components found in normal tube structures, such as safety valves and pressure switches, can be provided. No explicit limitations or descriptions are provided here.

The above are merely preferred embodiments of the present invention. It should be noted that those skilled in the art can make various improvements and modifications without departing from the principles of the present invention, and these improvements and modifications should also be considered within the scope of protection of the present invention.

## Claims

1. A thermal energy storage device, comprising:
a housing comprising an outer container, an inner container, and a thermal insulation unit, the inner container being provided inside the outer container, and the thermal insulation unit being provided in an intermediate interlayer between the inner container and the outer container;
a thermal energy storage material filled in the inner container;
a heat charging unit comprising at least one heat charging module configured to heat the thermal energy storage material; and
a heat discharging unit comprising at least one heat discharging module configured to supply heat externally by utilizing the heat stored in the thermal energy storage material.

2. The thermal energy storage device according to claim 1, wherein the intermediate interlayer is in a preset vacuum state, and/or the thermal insulation unit is provided with one or more nanometer thermal insulation material layer.

3. The thermal energy storage device according to claim 2, further comprising a vacuum pump in communication with the intermediate interlayer and configured to be operated to maintain a preset vacuum pressure.

4. The thermal energy storage device according to claim 3, wherein the preset vacuum pressure is in a range from 10 mbar to 200 mbar.

5. The thermal energy storage device according to claim 2, wherein the nanometer thermal insulation material layer comprises core material and an encapsulation portion, the core material is encapsulated in the encapsulation portion, and the core material comprises fumed silica particles, a light-shielding agent, and reinforcing fibers.

6. The thermal energy storage device according to claim 1, wherein the thermal insulation unit is provided with first thermal insulation plates comprising a nanometer thermal insulation material, and the first thermal insulation plates are located on a top surface and a bottom surface of the inner container.

7. The thermal energy storage device according to claim 1, wherein the thermal insulation unit is provided with a second thermal insulation plate comprising a nanometer thermal insulation material, and the second thermal insulation plate is located on an outer periphery of the inner container.

8. The thermal energy storage device according to claim 2, wherein the thermal insulation unit is provided with a plurality of the nanometer thermal insulation material layers, and a heat reflection layer is provided between each of the nanometer thermal insulation material layers.

9. The thermal energy storage device according to claim 1, wherein the thermal insulation unit comprises an inner layer thermal insulation portion and an outer layer thermal insulation portion, the inner layer thermal insulation portion is closer to the inner container than the outer layer thermal insulation portion, and the inner layer thermal insulation portion and the outer layer thermal insulation portion are made of different materials.

10. The thermal energy storage device according to claim 9, wherein the inner layer thermal insulation portion comprises at least one nanometer thermal insulation material layer and at least one heat reflection layer.

11. The thermal energy storage device according to claim 9, wherein the outer layer thermal insulation portion comprises at least one air gel felt layer and at least one heat reflection layer.

12. The thermal energy storage device according to any one of claims 1 to 11, wherein the heat charging module comprises an electric heat charging mechanism and a heat transferring sleeve, the heat transferring sleeve is at least partially located in the thermal energy storage material, and the electric heat charging mechanism comprises an electric heat charging rod inserted in the heat transferring sleeve.

13. The thermal energy storage device according to claim 12, wherein the heat transferring sleeve is made of any one selected from a group consisting of metal, graphite, and carbide ceramic.

14. The thermal energy storage device according to any one of claims 1 to 11, wherein the heat charging module comprises a photothermal charging mechanism and a heat charging tube, the heat charging tube is at least partially located in the thermal energy storage material, and the photothermal charging mechanism comprises a light transmission component configured to transmit light into the heat charging tube.

15. The thermal energy storage device according to claim 14, wherein an inner hole of the heat charging tube is a hole with a constant cross-section;
or, an inner hole of the heat charging tube is a hole with gradually reduced cross-section in a direction away from the light transmission component;
or, at least a partial section of an inner hole of the heat charging tube is provided with an internal thread or an engaging slot.

16. The thermal energy storage device according to claim 14, wherein the photothermal charging mechanism further comprises a light guiding component connected to the light transmission component, and the light guiding component is configured to guide the light transmitted from the light transmission component to an inner wall surface of the heat charging tube.

17. The thermal energy storage device according to any one of claims 1 to 11, wherein the thermal energy storage material comprises an aluminum-silicon alloy material capable of undergoing a phase change during a process of heat charging and a process of heat discharging, and the inner container is provided with a reserved space on an upper side of the thermal energy storage material.

18. The thermal energy storage device according to any one of claims 1 to 11, wherein a portion of at least one of the inner container, the heat charging module, and the heat discharging module in contact with the thermal energy storage material is provided with a corrosion resistant layer.

19. The thermal energy storage device according to claim 18, wherein the corrosion resistant layer is one or more selected from a group consisting of an electroplated layer, a structural ceramic layer, a structural ceramic mixed with graphite layer, a carbon steel aluminized layer, and a titanium alloy.

20. The thermal energy storage device according to any one of claims 1 to 11, wherein the heat discharging module comprises at least one heat discharging tube provided in the inner container or in the intermediate interlayer.

21. The thermal energy storage device according to any one of claims 1 to 11, wherein the heat discharging module comprises at least one heat discharging tube provided in the thermal energy storage material, and the heat discharging tube comprises an annular tube or a spiral coil;
or, at least a partial section of the heat discharging tube is a bend tube, and central axes of the heat discharging tubes are located in the same plane.

22. A thermal energy storage system, comprising the thermal energy storage device according to any one of claims 1 to 20, a heat charging apparatus, and a heat discharging apparatus, wherein the heat charging apparatus is configured to be connected to the heat charging unit to provide a heat source to the heat charging unit, and the heat discharging apparatus is configured to be connected to the heat discharging unit to provide a heat exchange medium externally.

23. The thermal energy storage system according to claim 22, wherein the heat exchange medium comprises water and/or water vapor, the heat discharging apparatus comprises a steam supply mechanism, the steam supply mechanism comprises a first water channel and a first vapor channel, the first water channel is in communication with an input end of the heat discharging unit, the first vapor channel is in communication with an output end of the heat discharging unit, the first water channel supplies water to the heat discharging unit, and the first vapor channel supplies hot water and/or water vapor externally.

24. The thermal energy storage system according to claim 23, wherein the heat discharging apparatus further comprises a second water channel, the first vapor channel is connected to a steam-water mixing component, and the second water channel is connected to the steam-water mixing component.
